# EUROPEAN PATENT APPLICATION

(11) **EP 4 598 116 A1**
(43) Date of publication of application: **06.08.2025**
(21) Application number: 22959844.6
(22) Date of filing: 27.09.2022
(51) Int. Cl.: H04W 36/00

(54) **MIGRATION TYPE DETERMINATION METHODS AND APPARATUSES THEREFOR**

(71) Applicant: Beijing Xiaomi Mobile Software Co., Ltd., Beijing 100085 (CN)
(72) Inventor: LI, Yanhua, Beijing 100085 (CN)
(74) Representative: Gunzelmann, Rainer
(86) International application number: PCT/CN2022/121810
(87) International publication number: WO 2024/065195

(57) **Abstract**

Disclosed in the embodiments of the present application are migration type determination methods and apparatuses therefor, which can be applied to the technical field of communications. One method comprises: according to first auxiliary information of a mobile IAB-node and/or second auxiliary information of a target IAB-donor of the IAB-node, a first network clement determines the migration type of the IAB-node so as to perform migration processing, thereby ensuring the service quality for a terminal device served by the IAB-node.

## Description

### TECHNICAL FIELD

The present disclosure relates to a field of communication technology, and in particular to a method and an apparatus for determining a migration type.

### BACKGROUND

At present, in a project research, for a scenario that a mobile integrated access and backhaul (IAB)-node (that is, a mobile IAB-node) is supported, a research work on the mobile IAB-node focuses on scenarios with coverage/capability enhancement where a 5th generation (5G) mobile communication technology is provided for an in-vehicle and/or a peripheral terminal. The 5G mobile communication technology may support the terminal to access a location service of a 5G system via the IAB-node.

An IAB-donor connected to the IAB-node may change with the IAB-node. In this way, there is a need to perform an IAB-node migration. The migration process includes following two types: a partial migration and a full migration. There is currently no specific implementation to determine a migration type of the migration process of the IAB-node.

### SUMMARY

The embodiments of the present disclosure provide a method and an apparatus for determining a migration type. A first network element may determine a migration type of a mobile integrated access and backhaul (IAB)-node according to first assistance information of the IAB-node and/or second assistance information of a target IAB-donor of the IAB-node, and then a migration process may be performed, which ensures a service quality of a terminal served by the IAB-node.

According to a first aspect of the embodiments of the present disclosure, a method for determining a migration type is provided, executed by a first network element, including:
determining a migration type of a mobile IAB-node according to first assistance information of the IAB-node and/or second assistance information of a target IAB-donor of the IAB-node,
in which the migration type includes a full migration and a partial migration.

In the embodiments of the present disclosure, the first network element may determine the migration type of the IAB-node according to the first assistance information of the IAB-node and/or the second assistance information of the target IAB-donor of the IAB-node, and then the migration process is performed, which ensures the service quality of the terminal served by the IAB-node.

According to a second aspect of the embodiments of the present disclosure, another method for determining a migration type is provided, executed by a second network element, including:
sending information to determine a migration type of a mobile IAB-node to a first network element,
in which the information to determine the migration type of the IAB-node includes at least one of: first assistance information of the IAB-node, or second assistance information of a target IAB-donor of the IAB-node; and
the migration type including a full migration and a partial migration.

In the embodiments of the present disclosure, the second network element may send the information to determine the migration type of the IAB-node to the first network element, in which the information to determine the migration type of the IAB-node includes at least one of: the first assistance information of the IAB-node, or the second assistance information of the target IAB-donor of the IAB-node; and then the migration process is performed, which ensures the service quality of the terminal served by the IAB-node.

According to a third aspect of the embodiments of the present disclosure, a communication apparatus is provided. The communication apparatus has some or all of functions of the first network element in the method of the above first aspect, for example, the communication apparatus may have functions in some or all embodiments of the present disclosure, or may have functions of solely implementing any one of the embodiments of the present disclosure. The functions may be realized by hardware, or by hardware executing corresponding software. The hardware or software includes one or more units or modules corresponding to the above functions.

In an implementation, the communication apparatus may include a transceiver module and a processing unit configured to support the communication apparatus to perform corresponding functions in the above method. The transceiver unit is configured to support communication between the communication apparatus and other devices. The communication apparatus may also include a storage unit for coupling with the transceiver module and the processing unit, in which the storage unit stores a computer program and data necessary for the communication apparatus.

As an example, the processing unit may be a processor, the transceiver unit may be a transceiver or a communication interface, and the storage unit may be a memory.

According to a fourth aspect of the embodiments of the present disclosure, another communication apparatus is provided. The communication apparatus has some or all of functions of the second network element in the method of the above second aspect, for example, the communication apparatus may have functions in some or all embodiments of the present disclosure, or may have functions of solely implementing any one of the embodiments of the present disclosure. The functions may be realized by hardware, or by hardware executing corresponding software. The hardware or software includes one or more units or modules corresponding to the above functions.

In an implementation, a structure of the communication apparatus may include a transceiver module and a processing unit configured to support the communication apparatus to perform corresponding functions in the above method. The transceiver unit is configured to support communication between the communication apparatus and other devices. The communication apparatus may also include a storage unit for coupling with the transceiver module and the processing unit, in which the storage unit stores a computer program and data necessary for the communication apparatus.

As an example, the processing unit may be a processor, the transceiver unit may be a transceiver or a communication interface, and the storage unit may be a memory.

According to a fifth aspect of the embodiments of the present disclosure, a communication device including a processor is provided. When a computer program in a memory is called by the processor, the method in the above first aspect is implemented.

According to a sixth aspect of the embodiments of the present disclosure, a communication device including a processor is provided. When a computer program in a memory is called by the processor, the method in the above second aspect is implemented.

According to a seventh aspect of the embodiments of the present disclosure, a communication device is provided, including a processor and a memory for storing a computer program. When the computer program stored in the memory is executed by the processor, the communication device is caused to implement the method in the above first aspect.

According to an eighth aspect of the embodiments of the present disclosure, a communication device is provided, including a processor and a memory for storing a computer program. When the computer program stored in the memory is executed by the processor, the communication device is caused to implement the method in the above second aspect.

According to a ninth aspect of the embodiments of the present disclosure, a communication device including a processor and an interface circuit is provided, in which the interface circuit is configured to receive code instructions and transmit the code instructions to the processor; and the processor is configured to run the code instructions to cause the communication device to implement the method in the above first aspect.

According to a tenth aspect of the embodiments of the present disclosure, a communication device including a processor and an interface circuit is provided, in which the interface circuit is configured to receive code instructions and transmit the code instructions to the processor; and the processor is configured to run the code instructions to cause the communication device to implement the method in the above second aspect.

According to an eleventh aspect of the embodiments of the present disclosure, a communication system is provided. The system includes the communication device in the third aspect and the communication device in the fourth aspect, or the communication device in the fifth aspect and the communication device in the sixth aspect, or the communication device in the seventh aspect and the communication device in the eighth aspect, or the communication device in the ninth aspect and the communication device in the tenth aspect.

According to a twelfth aspect of the embodiments of the present disclosure, a computer readable storage medium is provided, for storing instructions used by the above terminal. When the instructions are executed, the terminal is caused to implement the method in the above first aspect.

According to a thirteenth aspect of the embodiments of the present disclosure, a computer readable storage medium is provided, for storing instructions used by the above network device. When the instructions are executed, the network device is caused to implement the method in the above second aspect.

According to a fourteenth aspect of the present disclosure, a computer program product including a computer program is provided. When the computer program is running on a computer, the computer is caused to implement the method in the above first aspect.

According to a fifteenth aspect of the present disclosure, a computer program product including a computer program is provided. When the computer program is running on a computer, the computer is caused to implement the method in the above second aspect.

According to a sixteenth aspect of the present disclosure, a chip system is provided. The chip system includes at least one processor and interface, configured to support a terminal to perform functions involved in the first aspect, for example, to determine or process at least one of data and information involved in the above methods. In a possible design, the chip system also includes a memory for saving computer programs and data necessary for the terminal. The chip system may be consisted of a chip, or may include a chip and other discrete devices.

According to a seventeenth aspect of the present disclosure, a chip system is provided. The chip system includes at least one processor and interface, configured to support a network device to perform functions involved in the second aspect, for example, to determine or process at least one of data and information involved in the above methods. In one possible design, the chip system also includes a memory for saving computer programs and data necessary for the network device. The chip system may be consisted of a chip, or may include a chip and other discrete devices.

According to an eighteenth aspect of the present disclosure, a computer program is provided. When the computer program is running on a computer, the computer is caused to implement the method in the above first aspect.

According to a nineteenth aspect of the present disclosure, a computer program is provided. When the computer program is running on a computer, the computer is caused to implement the method in the above second aspect.

### BRIEF DESCRIPTION OF THE DRAWINGS

In order to clearly illustrate technical solutions of embodiments of the present disclosure or background, a brief description of drawings used in embodiments or the background is given below.
FIG. 1 is a schematic diagram of an architecture of a communication system according to the embodiments of the present disclosure.
FIG. 2 is a schematic diagram of an architecture of an integrated access and backhaul (IAB).
FIG. 3 is a schematic diagram of a partial migration.
FIG. 4 is a schematic diagram of two partial migrations.
FIG. 5 is a flowchart of a method for determining a migration type according to the embodiments of the present disclosure.
FIG. 6 is a flowchart of another method for determining a migration type according to the embodiments of the present disclosure.
FIG. 7 is a flowchart of another method for determining a migration type according to the embodiments of the present disclosure.
FIG. 8 is a schematic diagram of determining a migration type by an F1-terminating IAB-donor.
FIG. 9 is a flowchart of another method for determining a migration type according to the embodiments of the present disclosure.
FIG. 10 is a schematic diagram of determining a migration type by an IAB-node.
FIG. 11 is a flowchart of another method for determining a migration type according to the embodiments of the present disclosure.
FIG. 12 is a schematic diagram of determining a migration type by a non-F1-terminating IAB-donor.
FIG. 13 is a flowchart of another method for determining a migration type according to the embodiments of the present disclosure.
FIG. 14 is a schematic diagram of determining a migration type by a target IAB-donor.
FIG. 15 is a flowchart of a method for determining a migration type according to the embodiments of the present disclosure.
FIG. 16 is a flowchart of a method for determining a migration type according to the embodiments of the present disclosure.
FIG. 17 is a flowchart of another method for determining a migration type according to the embodiments of the present disclosure.
FIG. 18 is a flowchart of another method for determining a migration type according to the embodiments of the present disclosure.
FIG. 19 is a flowchart of another method for determining a migration type according to the embodiments of the present disclosure.
FIG. 20 is a flowchart of another method for determining a migration type according to the embodiments of the present disclosure.
FIG. 21 is a block diagram of a communication apparatus according to the embodiments of the present disclosure.
FIG. 22 is a block diagram of another communication device according to the embodiments of the present disclosure.
FIG. 23 is a block diagram of a chip according to the embodiments of the present disclosure.

### DETAILED DESCRIPTION

In order to better understand a method for determining a migration type in embodiments of the present disclosure, a communication system applicable to the embodiments of the present disclosure is firstly described.

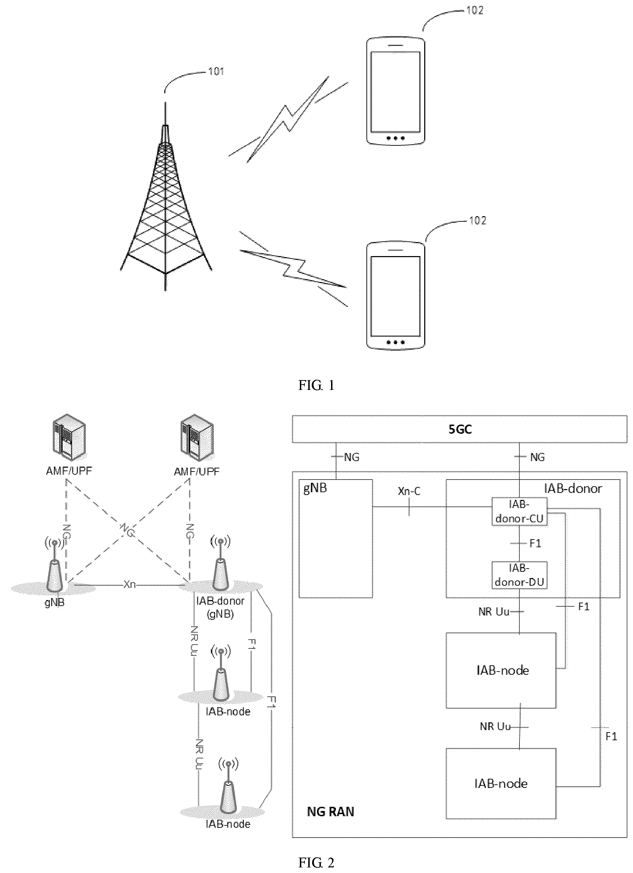

Please refer to FIG. 1, which is a schematic diagram of an architecture of a communication system according to the embodiments of the present disclosure. The communication system may include, but is not limited to, one network device and one terminal. The number and shape of the devices shown in FIG 1 are only for example and do not constitute a limitation of embodiments of the present disclosure. In practical applications, two or more network devices and two or more terminals may be included. The communication system illustrated in FIG 1 includes a network device 101 and a terminal 102 as an example.

It needs to be noted that technical solutions in embodiments of the present disclosure may be applied to various communication systems, for example, a long term evolution (LTE) system, a 5th generation (5G) mobile communication system, a 5G new radio (NR) system, or other new mobile communication systems in the future.

The network device 101 in the embodiments of the present disclosure is an entity on the network side for sending or receiving signals. For example, the network device 101 may be an evolved NodeB (eNB), a transmission reception point (TRP), or a next generation NodeB (gNB) in the NR system, a base station in other future mobile communication systems, or an access node in a wireless fidelity (WiFi) system, etc. The embodiments of the present disclosure do not limit a specific technology and a specific device form used by the network device. The network device in embodiments of the present disclosure includes a central unit (CU) and a distributed unit (DU), in which the CU may also be called a control unit. The structure of CU-DU may be used to separate protocol layers of the network device, for example, a base station, so that some of the functions of the protocol layers are centrally controlled by the CU, and the remaining part or all of the functions of the protocol layers are distributed in the DU, which is centrally controlled by the CU.

The terminal 102 in embodiments of the present disclosure is an entity on the user side for receiving or sending signals, such as a mobile phone. The terminal may also be called a user equipment (UE), a mobile station (MS), a mobile terminal (MT), etc. The terminal may be a car, a smart car, a mobile phone, a wearable device, and a Pad, with communication function, a computer with wireless transceiving functions, a virtual reality (VR) terminal, an augmented reality (AR) terminal, a wireless terminal in an industrial control, a wireless terminal in a self-driving, a wireless terminal in remote medical surgery, a wireless terminal in a smart grid, a wireless terminal in a transportation safety, a wireless terminal in a smart city, a wireless terminal in a smart home, etc. The embodiments of the present disclosure do not limit the specific technology and the specific device form used by the terminal.

Integrated access and backhaul (IAB) supports a millimeter wave base station for a radio access and backhaul, which may effectively reduce a need for an additional fiber deployment when deploying a dense network, and enables a radio relay in a next generation-radio access network (NG-RAN). A relay node is also called an IAB-node, which supports the radio access and backhaul via a new radio (NR). A termination node of an NR backhaul on the network side is called an IAB-donor, which is a next generation Node B (gNB) with an IAB function. The backhaul may be performed via a single-hop or a multi-hop. An architecture of the IAB is shown in FIG. 2.

In FIG. 2, the NG-RAN supports the IAB function by wirelessly connecting to a gNB (i.e., the IAB-donor) capable of serving the IAB-node via the IAB node. The IAB-donor includes an IAB-donor-CU and one or more IAB-donor-DU. When gNB-CU-control plane (CP) and gNB-CU-user plane (UP) are separated, the IAB-donor may include one IAB-donor-CU-CP, a plurality of IAB-donor-CU-UPs, and a plurality of IAB-donor-DUs. The IAB-node connects with an uplink IAB-node or an IAB-donor-DU via a terminal function subset of an NR Uu interface (i.e., an IAB-MT function of the IAB-node, where the abbreviation "MT" is mobile termination). The IAB-node provides a wireless backhaul to a downlink IAB-node and a terminal via a network function of the NR Uu interface (that is, an IAB-DU function of the IAB-node).

An F1 control plane (F1-C) service between the IAB-node and the IAB-donor-CU is transmitted back via the IAB-donor-DU and an optional intermediate hop IAB-node. An F1 user plane (F1-U) service between the IAB-node and the IAB-donor-CU is transmitted back via the IAB-donor-DU and the optional intermediate hop IAB-node.

At present, in a research of R18, a scenario that a mobile IAB-node is supported, a research work on the mobile IAB-node focuses on scenarios with coverage/capability enhancement where a 5G mobile communication technology is provided for an in-vehicle and/or a peripheral terminal. The 5G mobile communication technology may support the terminal to access a location service of a 5G system via the IAB-node.

The IAB-donor connected with the IAB-node may change with the IAB-node. In this way, there is a need to perform an IAB-node migration process. The migration process includes following two types: a partial migration and a full migration. There is currently no specific implementation to determine a migration type of the migration process of the IAB-node.

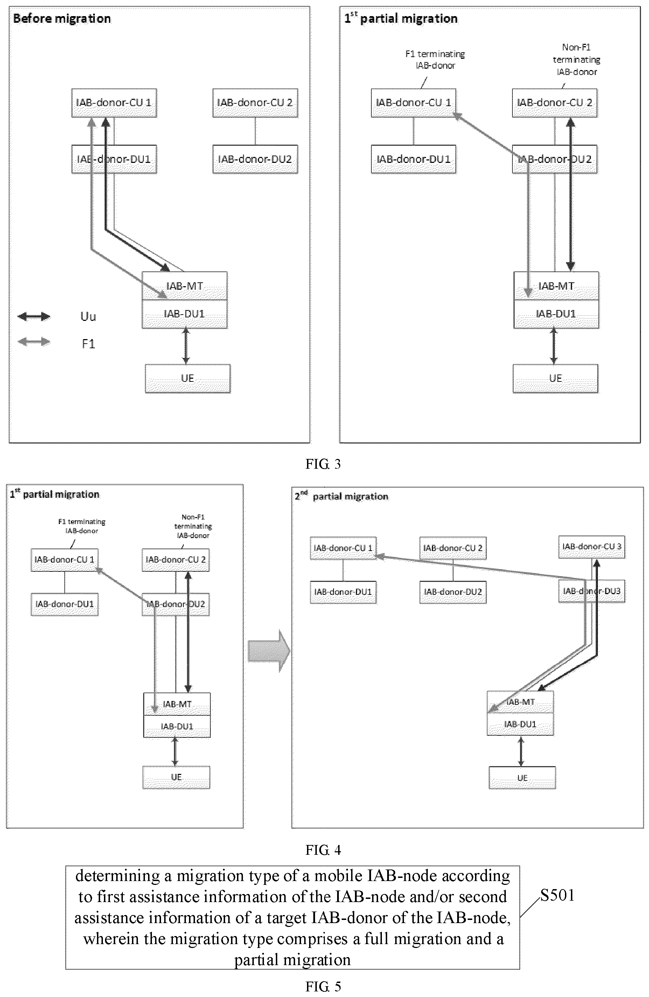

The partial migration refers to that only an IAB mobile termination (IAB-MT) on the IAB-node is migrated (also known as switched) to a new IAB-donor, and an IAB distributed unit (IAB-DU) on the IAB-node is still connected to a source IAB-donor, that is, a context of the terminal on the IAB-DU is also saved at the source IAB-donor. FIG 3 is a schematic diagram of a partial migration. In FIG 3, an IAB-donor-CU1 is a source IAB-donor serving the IAB-node. After one partial migration, the IAB-donor- CU1 may be called an F1 terminating IAB-donor. At this time, data of the terminal may be transmitted between the terminal (UE in FIG. 3) and the IAB-donor-CU1 (only the data is routed via an IAB-donor-DU2) via an F1 connection (a left double-headed arrow in a left diagram of FIG. 3, and a left double-headed arrow in a right diagram of FIG. 3). That is, the context of the terminal is saved in the F1 terminating IAB-donor, but the IAB-MT has been switched to an IAB-donor-CU2. Data of the IAB-MT may be connected via the Uu interface (a right double-headed arrow in a left diagram of FIG. 3, and a right double-headed arrow in a right diagram of FIG. 3) via the IAB-donor-CU2. The IAB-donor-CU2 is called a non-F1 terminating IAB-donor.

FIG. 4 is a schematic diagram of two partial migrations, that is, another partial migration is performed after one partial migration of the IAB-node in FIG. 3. In FIG 4, the IAB-donor-CU1 is the source IAB-donor serving the IAB-node. After two partial migrations, the IAB-donor-CU1 may be called the F1 terminating IAB-donor. At this time, the data of the terminal may be transmitted between the UE and the IAB-donor-CU1 (only the data is routed via an IAB-donor-DU3) via the F1 connection (the left double-headed arrow in the left diagram of FIG. 4, and the left double-headed arrow in the right diagram of FIG. 4), but the IAB-MT has been switched to an IAB-donor-CU3. Data of the IAB-MT may be connected via the Uu interface (the right double-headed arrow in the left diagram of FIG. 4, and the right double-headed arrow in the right diagram of FIG. 4) via the IAB-donor-CU3.

The full migration refers to that both the IAB-MT and the IAB-DU on the IAB-node are migrated to a new IAB-donor.

A mobile IAB-node may undergo a plurality of partial migrations and/or a plurality of full migrations. If a last migration was the full migration, in a new migration, the IAB-donor connected before the IAB-node migrates may be called a source IAB-donor. The IAB-donor connected after the IAB-node migrates may be called a target IAB-donor. At this time, the IAB-node may perform either the full migration or the partial migration. The problem that needs to be solved is how to determine the migration type (that is, determining whether to perform the full migration or the partial migration).

If the last migration was the partial migration, in a new migration, the F1-terminating IAB-donor is an IAB-donor1, the non-F1-terminating IAB-donor is an IAB-donor2. As the IAB node moves, the IAB-MT may switch to a new IAB-donor (also known as a target IAB-donor), that is, an IAB-donor3. The IAB-node may perform either the full migration or the partial migration. The problem to be solved is how to determine the migration type (that is, determining whether to perform the full migration or the partial migration).

The first network element in the embodiments of the present disclosure may refer to one of the network devices 101, and the second network element may refer to the other of the network devices 101.

It may be understood that the communication system in the embodiments of the present disclosure is intended to illustrate the technical solution in the embodiments of the present disclosure more clearly, and does not constitute a limitation of the technical solution in the embodiments of the present disclosure. Those skilled in the art may know that the technical solution in the embodiments of the present disclosure is also applicable to similar technical problems, with the evolution of a system architecture and the emergence of a new service scene.

It needs to be noted that the method for determining a migration type in any one of the embodiments of the present disclosure may be performed alone, or in combination with possible implementations in other embodiments, or in combination with any one of technical solutions in the related art.

The method and the apparatus for determining a migration type in the present disclosure are described in detail below in conjunction with attached drawings.

Please refer to FIG 5, which is a flowchart of a method for determining a migration type according to the embodiments of the present disclosure. The method for determining a migration type is executed by a first network element. As shown in FIG. 5, the method may include but is not limited to S501.

At S501, a migration type of a mobile IAB-node is determined according to first assistance information of the IAB-node and/or second assistance information of a target IAB-donor of the IAB-node, in which the migration type includes a full migration and a partial migration.

In the embodiments of the present disclosure, the first assistance information is context information of the terminal served by the IAB-node. The first assistance information includes at least one of: a number of terminals served by the IAB-node, a number of data radio bearers (DRBs) served by the IAB-node, a service bandwidth requirement on the IAB-node, a service delay requirement on the IAB-node, or information of a core network node.

The information of the core network node may include at least one piece of: information of a control plane node of the core network or information of a user plane node of the core network. For example, the information of the control plane node of the core network is an identifier (ID) of the control plane node, transmission network address information, or the like. For example, the information of the user plane node of the core network is an ID of the user plane node, transmission network address information, or the like.

In the embodiments of the present disclosure, the second assistance information of the target IAB-donor may be information related to a resource of the target IAB-donor. The second assistance information may include at least one of: resource information that the target IAB-donor may provide, or a resource state of the target IAB-donor.

The resource information that the target IAB-donor may provide may include at least one of: a number of terminals acceptable by the target IAB-donor, a number of DRBs acceptable by the target IAB-donor, a service bandwidth supportable by the target IAB-donor, or a service delay supportable by the target IAB-donor.

The resource state of the target IAB-donor may include at least one of: a number of terminals currently accepted by the target IAB-donor, a number of DRBs currently accepted by the target IAB-donor, a current service bandwidth of the target IAB-donor, or a current service delay of the target IAB-donor.

In the embodiments of the present disclosure, the service delay supportable by the target IAB-donor includes a transmission network delay between the target IAB-donor and a core network node, in which the transmission network delay is confirmed by the target IAB-donor according to information of the core network node; and the information of the core network node is provided by the IAB-node, or a source IAB-donor when the migration type of the IAB-node in a last migration is the full migration.

In the embodiments of the present disclosure, the first network element may be any one of: a network element when the migration type of the IAB-node in the last migration is the full migration, or a network element when the migration type of the IAB-node in the last migration is the partial migration.

The network element when the migration type of the IAB-node in the last migration is the full migration, for example, may be a source IAB donor, the IAB-node, or a target IAB-node donor of the IAB-node.

The network element when the migration type of the IAB-node in the last migration is the partial migration, for example, is an F1 terminating IAB-donor of the IAB-node, the IAB-node, a non-F1 terminating IAB-donor of the IAB-node, the target IAB-donor of the IAB-node.

In the embodiments of the present disclosure, it needs to be noted that after the first network element determines the migration type, a corresponding network element may perform an operation related to the migration according to indication of the migration type. For example, in response to the migration type of the IAB-node in the last migration being the full migration and the migration type being the full migration, full migration indication information may be sent to the IAB-node, in which the full migration indication information indicates the IAB-node to perform an operation related to the full migration; and in response to the migration type being the partial migration, partial migration indication information may be sent to the source IAB-donor of the IAB-node, in which the partial migration indication information indicates the source IAB-donor to perform an operation related to the partial migration.

For example, in response to the migration type of the IAB-node in the last migration being the partial migration and the migration type being the full migration, full migration indication information is sent to the IAB-node, in which the full migration indication information indicates the IAB-node to perform an operation related to the full migration; or in response to the migration type being the partial migration, partial migration indication information may be sent to an F1-terminating IAB-donor of the IAB-node, in which the partial migration indication information indicates the F1-terminating IAB-donor to perform an operation related to the partial migration.

In the method for determining a migration type in the embodiments of the present disclosure, the first network element may determine the migration type of the IAB-node according to the first assistance information of the mobile IAB-node and/or the second assistance information of the target IAB-donor of the IAB-node, and then the migration process is performed, which ensures a service quality of the terminal served by the IAB-node.

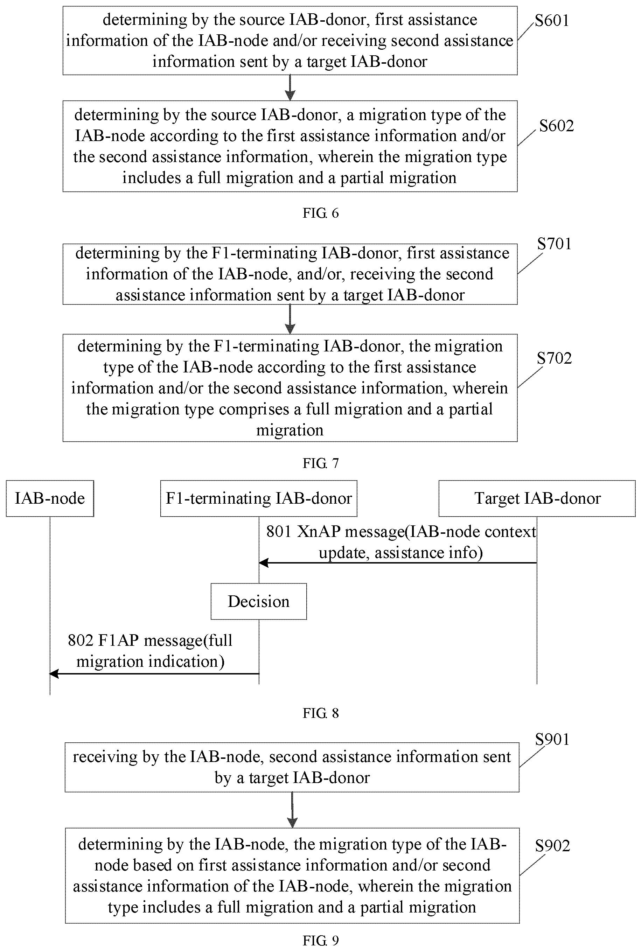

Please refer to FIG. 6, which is a flowchart of another method for determining a migration type according to the embodiments of the present disclosure. The method for determining a migration type is executed by the source IAB-donor of the IAB-node when the migration type of the IAB-node in the last migration is the full migration. As shown in FIG. 6, the method may include but is not limited to S601 to S602.

At S601, the source IAB-donor determines first assistance information of the IAB-node and/or receives second assistance information sent by a target IAB-donor.

In the embodiments of the present disclosure, in one example, the source IAB-donor may determine the first assistance information of the IAB-node. In another example, the source IAB-donor may receive the second assistance information sent by the target IAB-donor. In another example, the source IAB-donor may determine the first assistance information of the IAB-node and receive the second assistance information sent by the target IAB-donor.

In the embodiments of the present disclosure, there may be at least two methods that the source IAB-donor receives the second assistance information sent by the target IAB-donor. In one example, the source IAB-donor may receive the second assistance information sent by the target IAB-donor, in which the second assistance information is configured to determine the migration type of the IAB-node; and the second assistance information also indicates information that an IAB-MT switches to the target IAB-donor.

In another example, the source IAB-donor may receive the second assistance information and IAB-node context update information sent by the target IAB-donor; in which the second assistance information is configured to determine the migration type of the IAB-node, and the IAB-node context update information indicates to the source IAB-donor, information that an IAB-MT switches to the target IAB-donor.

In both examples above, the source IAB-donor may receive an Xn application protocol (XnAP) message sent by the target IAB-donor, in which the XnAP message carries the second assistance information and/or the IAB-node context update information.

It needs to be noted that the IAB-MT switching to the target IAB-donor may mean that the IAB-MT is switching to the target IAB-donor, or that the IAB-MT has switched to the target IAB-donor.

At S602, the source IAB-donor determines a migration type of the IAB-node according to the first assistance information and/or the second assistance information, in which the migration type includes a full migration and a partial migration.

In the embodiments of the present disclosure, the first assistance information of the IAB-node may be context information of the terminal served by the IAB-node. The first assistance information may include at least one of: a number of terminals served by the IAB-node, a number of DRBs served by the IAB-node, a service bandwidth requirement on the IAB-node, a service delay requirement on the IAB-node, or information of a core network node.

In the embodiments of the present disclosure, the second assistance information of the target IAB-donor may be information related to a resource of the target IAB-donor. The second assistance information may include at least one of: resource information that the target IAB-donor may provide, or a resource state of the target IAB-donor.

The resource information that the target IAB-donor may provide may include at least one of: a number of terminals acceptable by the target IAB-donor, a number of DRBs acceptable by the target IAB-donor, a service bandwidth supportable by the target IAB-donor, or a service delay supportable by the target IAB-donor.

The resource state of the target IAB-donor may include at least one of: a number of terminals currently accepted by the target IAB-donor, a number of DRBs currently accepted by the target IAB-donor, a current service bandwidth of the target IAB-donor, or a current service delay of the target IAB-donor.

In the embodiments of the present disclosure, after S602 is performed, the source IAB-donor may also perform following procedures: in response to the migration type being the full migration, sending full migration indication information to the IAB-node, in which the full migration indication information indicates the IAB-node to perform an operation related to the full migration; or in response to the migration type being the partial migration, performing an operation related to the partial migration.

The operation related to the full migration includes, for example, creating a new logical DU, etc. The operation related to the partial migration includes, for example, sending an IAB transport migration management request message to the target IAB-donor, etc.

It needs to be noted that "in response to" and "if" have the same meaning in the present disclosure.

In the method for determining a migration type in the embodiments of the present disclosure, the source IAB-donor may determine the first assistance information of the IAB-node and/or receives the second assistance information sent by the target IAB-donor; and the source IAB-donor determines the migration type of the IAB-node according to the first assistance information and/or the second assistance information, in which the migration type includes the full migration and the partial migration, and then the migration process is performed, which ensures a service quality of the terminal served by the IAB-node.

Please refer to FIG. 7, which is a flowchart of another method for determining a migration type according to the embodiments of the present disclosure. The method for determining a migration type may be executed by an F1-terminating IAB-donor when the migration type of an IAB-node in a last migration is a partial migration. As shown in FIG. 7, the method may include but is not limited to S701 to S702.

At S701, the F1-terminating IAB-donor determines first assistance information of the IAB-node, and/or, receives the second assistance information sent by a target IAB-donor.

In the embodiments of the present disclosure, in one example, the F1-terminating IAB-donor may determine the first assistance information of the IAB-node. In another example, the F1-terminating IAB-donor may receive the second assistance information sent by the target IAB-donor. In another example, the F1-terminating IAB-donor may determine the first assistance information of the IAB-node and receive the second assistance information sent by the target IAB-donor.

In the embodiments of the present disclosure, there may be at least two methods that the F1-terminating IAB-donor receives the second assistance information sent by the target IAB-donor. In one example, the F1-terminating IAB-donor may receive the second assistance information sent by the target IAB-donor, in which the second assistance information is configured to determine the migration type of the IAB-node; and the second assistance information also indicates to the F1-terminating IAB-donor, information that an IAB-MT switches to the target IAB-donor.

In another example, the F1-terminating IAB-donor may receive the second assistance information and IAB-node context update information sent by the target IAB-donor; in which the second assistance information is configured to determine the migration type of the IAB-node, and the IAB-node context update information indicates to the F1-terminating IAB-donor, information that an IAB-MT switches to the target IAB-donor.

In both examples above, the F1-terminating IAB-donor may receive an XnAP message sent by the target IAB-donor, in which the XnAP message carries the second assistance information and/or the IAB-node context update information.

At S702, the F1-terminating IAB-donor determines the migration type of the IAB-node according to the first assistance information and/or the second assistance information, in which the migration type includes a full migration and a partial migration.

In the embodiments of the present disclosure, the first assistance information of the IAB-node may be context information of the terminal served by the IAB-node. The first assistance information may include at least one of: a number of terminals served by the IAB-node, a number of DRBs served by the IAB-node, a service bandwidth requirement on the IAB-node, a service delay requirement on the IAB-node, or information of a core network node.

In the embodiments of the present disclosure, the second assistance information of the target IAB-donor may be information related to a resource of the target IAB-donor. The second assistance information may include at least one of: resource information that the target IAB-donor may provide, or a resource state of the target IAB-donor.

The resource information that the target IAB-donor may provide may include at least one of: a number of terminals acceptable by the target IAB-donor, a number of DRBs acceptable by the target IAB-donor, a service bandwidth supportable by the target IAB-donor, or a service delay supportable by the target IAB-donor.

The resource state of the target IAB-donor may include at least one of: a number of terminals currently accepted by the target IAB-donor, a number of DRBs currently accepted by the target IAB-donor, a current service bandwidth of the target IAB-donor, or a current service delay of the target IAB-donor.

In the embodiments of the present disclosure, after S702 is performed, the F1-terminating IAB-donor may also perform following procedures: in response to the migration type being the full migration, sending full migration indication information to the IAB-node, in which the full migration indication information indicates the IAB-node to perform an operation related to the full migration; or in response to the migration type being the partial migration, performing an operation related to the partial migration.

The operation related to the full migration includes, for example, creating a new logical DU, etc. The operation related to the partial migration includes, for example, sending an IAB transport migration management request message to the target IAB-donor, etc.

It needs to be noted that "in response to" and "if" have the same meaning in the present disclosure.

It needs to be noted that "carry" and "comprise/include" have the same meaning in the present disclosure. The term "comprise/include" in the present disclosure is an open limitation, that is, in addition to the content indicated in the present disclosure, it may also include the content that is not indicated in the present disclosure but may appear in the future. For example, the migration type includes the full migration and the partial migration, which means that the migration type at least includes the full migration and the partial migration, and may also include new migration types in the future.

The following is an example. As shown in FIG. 8, which is a schematic diagram of determining a migration type by an F1-terminating IAB-donor. The migration type of the IAB-node in a last migration is a partial migration. FIG 8 includes S801 to S802. At S801, an F1-terminating IAB-donor receives an XnAP message sent by a target IAB-donor, in which the XnAP message includes second assistance information of the target IAB-donor and IAB-node context update information. At S802, in cast that the F1-terminating IAB-donor decides to perform a full migration, the F1-terminating IAB-donor sends full migration indication information to the IAB-node via an F1 application protocol (F1AP) message.

In the method for determining a migration type in the embodiments of the present disclosure, the F1-terminating IAB-donor may determine the first assistance information of the IAB-node and/or receive the second assistance information sent by the target IAB-donor; and determine the migration type of the IAB-node according to the first assistance information and/or the second assistance information, in which the migration type includes the full migration and the partial migration, and then the migration process is performed, which ensures a service quality of the terminal served by the IAB-node.

Please refer to FIG. 9, which is a flowchart of another method for determining a migration type according to the embodiments of the present disclosure. The method for determining a migration type may be executed by an IAB-node. As shown in FIG. 9, the method may include but is not limited to S901 to S902.

At S901, the IAB-node receives second assistance information sent by a target IAB-donor.

In the embodiments of the present disclosure, a migration type of the IAB-node in a last migration may be a full migration or a partial migration.

It needs to be noted that S901 is an optional step, that is, S901 and S902 may both be executed, or S902 may be solely executed without S901.

In the embodiments of the present disclosure, the IAB-node may receive an XnAP message sent by the target IAB-donor, in which the XnAP message carries the second assistance information.

At S902, the IAB-node determines the migration type of the IAB-node according to first assistance information and/or second assistance information of the IAB-node, in which the migration type includes a full migration and a partial migration.

In the embodiments of the present disclosure, the first assistance information of the IAB-node may be context information of the terminal served by the IAB-node. The first assistance information may include at least one of: a number of terminals served by the IAB-node, a number of DRBs served by the IAB-node, a service bandwidth requirement on the IAB-node, a service delay requirement on the IAB-node, or information of a core network node.

In the embodiments of the present disclosure, the second assistance information of the target IAB-donor may be information related to a resource of the target IAB-donor. The second assistance information may include at least one of: resource information that the target IAB-donor may provide, or a resource state of the target IAB-donor.

The resource information that the target IAB-donor may provide may include at least one of: a number of terminals acceptable by the target IAB-donor, a number of DRBs acceptable by the target IAB-donor, a service bandwidth supportable by the target IAB-donor, or a service delay supportable by the target IAB-donor.

The resource state of the target IAB-donor may include at least one of: a number of terminals currently accepted by the target IAB-donor, a number of DRBs currently accepted by the target IAB-donor, a current service bandwidth of the target IAB-donor, or a current service delay of the target IAB-donor.

In the embodiments of the present disclosure, after S902 is performed, the IAB-node may also perform following procedures: in response to the migration type being the full migration, performing an operation related to the full migration; or in response to the migration type being the partial migration and the migration type of the IAB-node in a last migration being the full migration, sending partial migration indication information to a source IAB-donor of the IAB-node; or in response to the migration type being the partial migration and the migration type of the IAB-node in a last migration being the partial migration, sending partial migration indication information to an F1-terminating IAB-donor of the IAB-node, in which the partial migration indication information indicates to perform an operation related to the partial migration.

It needs to be noted that, in response to the migration type being the partial migration and the migration type of the IAB-node in the last migration being the full migration, the IAB-node may send an F1AP message to the source IAB-donor, in which the F1AP message includes the partial migration indication information, and the F1AP message may be a next generation node B-distributed unit (GNB-DU) configuration update message or other F1AP messages.

It needs to be noted that, in response to the migration type being the partial migration and the migration type of the IAB-node in the last migration being the partial migration, the IAB-node may send an F1AP message to the F1-terminating IAB-donor, in which the F1AP message includes the partial migration indication information, and the F1AP message may be a GNB-DU configuration update message or other F1AP messages.

It needs to be noted that the partial migration indication information further includes: a partial migration reason, in which the partial migration reason indicates that a reason of the partial migration is mobility of the IAB-node.

The operation related to the full migration includes, for example, creating a new logical DU, etc. The operation related to the partial migration includes, for example, sending an IAB transport migration management request message to the target IAB-donor, etc.

It needs to be noted that "in response to" and "if" have the same meaning in the present disclosure.

It needs to be noted that "carry" and "comprise/include" have the same meaning in the present disclosure. The term "comprise/include" in the present disclosure is an open limitation, that is, in addition to the content indicated in the present disclosure, it may also include the content that is not indicated in the present disclosure but may appear in the future.

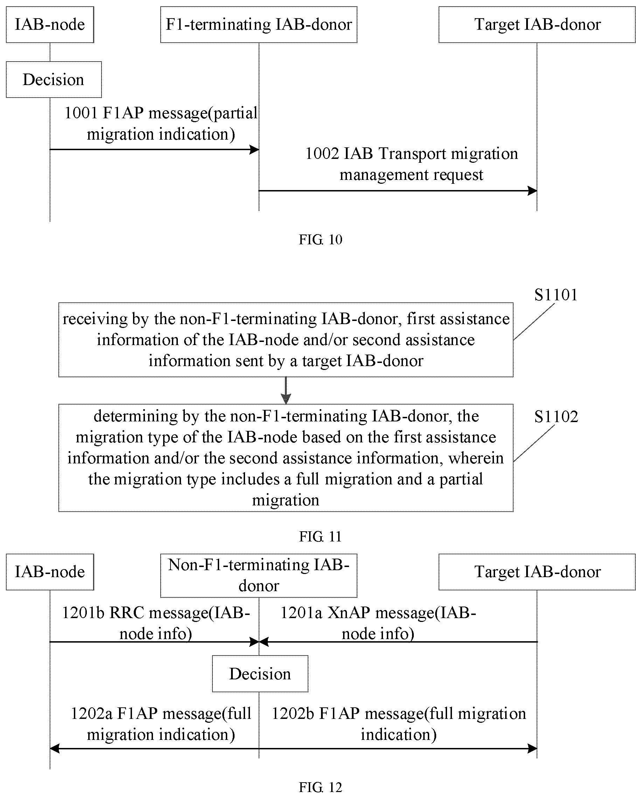

The following is an example. As shown in FIG 10, which is a schematic diagram of determining a migration type by an IAB-node. The migration type of the IAB-node in a last migration is a partial migration. FIG. 10 includes S1001 to S1002. At S1001, if the IAB-node decides to perform the partial migration, the IAB-node sends partial migration indication information to an F1-terminating IAB-donor via an F1AP message. At S1002, the F1-terminating IAB-donor receives the F1AP message. If the F1AP message includes the partial migration indication information, the F1-terminating IAB-donor performs an operation related to the partial migration, for example, sending an IAB transport migration management request message to the target IAB-donor, etc.

In the method for determining a migration type in the embodiments of the present disclosure, the IAB-node receives the second assistance information sent by the target IAB-donor; and the IAB-node determines the migration type of the IAB-node according to the first assistance information and/or the second assistance information, in which the migration type includes the full migration and the partial migration, and then the migration process is performed, which ensures a service quality of the terminal served by the IAB-node.

Please refer to FIG. 11, which is a flowchart of another method for determining a migration type according to the embodiments of the present disclosure. The method for determining a migration type may be executed by a non-F1-terminating IAB-donor of an IAB-node when the migration type of the IAB-node in a last migration is a partial migration. As shown in FIG 11, the method may include but is not limited to S1101 to S1102.

At S1101, the non-F1-terminating IAB-donor receives first assistance information of the IAB-node and/or second assistance information sent by a target IAB-donor.

In the embodiments of the present disclosure, there may be at least two methods that the non-F1-terminating IAB-donor receives the first assistance information of the IAB-node. In one example, the non-F1-terminating IAB-donor receives the first assistance information sent by an F1-terminating IAB-donor of the IAB-node. It needs to be noted that the non-F1-terminating IAB-donor may receive an XnAP message sent by the F1-terminating IAB-donor, in which the XnAP message carries the first assistance information, and the XnAP message may be a handover request message or other XnAP messages.

In another example, the non-F1-terminating IAB-donor receives the first assistance information sent by the IAB-node. It needs to be noted that the non-F1-terminating AB-donor may receive an RRC message sent by the IAB-node, in which the RRC message carries the first assistance information.

At S1102, the non-F1-terminating donor determines the migration type of the IAB-node according to the first assistance information and/or the second assistance information, in which the migration type includes a full migration and a partial migration.

In the embodiments of the present disclosure, the first assistance information of the IAB-node may be context information of a terminal served by the IAB-node, in which the first assistance information may include at least one of: a number of terminals served by the IAB-node, a number of DRBs served by the IAB-node, a service bandwidth requirement on the IAB-node, a service delay requirement on the IAB-node, or information of a core network node.

In the embodiments of the present disclosure, the second assistance information may be information related to a resource of the target IAB-donor, in which the second assistance information may include at least one of: resource information that the target IAB-donor may provide, or a resource state of the target IAB-donor.

The resource information that the target IAB-donor may provide may include at least one of: a number of terminals acceptable by the target IAB-donor, a number of DRBs acceptable by the target IAB-donor, a service bandwidth supportable by the target IAB-donor, or a service delay supportable by the target IAB-donor.

The resource state of the target IAB-donor may include at least one of: a number of terminals currently accepted by the target IAB-donor, a number of DRBs currently accepted by the target IAB-donor, a current service bandwidth of the target IAB-donor, or a current service delay of the target IAB-donor.

In the embodiments of the present disclosure, after S1102 is performed, the non-F1-terminating IAB-donor may also perform following procedures: in response to the migration type being the full migration, sending full migration indication information to the IAB-node, in which the full migration indication information indicates the IAB-node to perform an operation related to the full migration; or in response to the migration type being the partial migration, sending partial migration indication information to the F1-terminating IAB-donor of the IAB-node, in which the partial migration indication information indicates the F1-terminating IAB-donor to perform an operation related to the partial migration.

It needs to be noted that in response to the migration type being the full migration, the non-F1-terminating IAB-donor may send an RRC message to an IAB-MT in the IAB-node, in which the RRC message includes the full migration indication information, and the RRC message may be an RRC reconfiguration message or other RRC messages. After the IAB-MT receives the RRC message, in response to the RRC message including the full migration indication information, the IAB-node where the IAB-MT is located performs the operation related to the full migration.

It needs to be noted that in response to the migration type being the partial migration, the non-F1-terminating IAB-donor may send the XnAP message to the F1-terminating IAB-donor, in which the XnAP message includes partial migration indication information. After the F1-terminating IAB-donor receives the XnAP message, in response to the XnAP message including the partial migration indication information, the F1-terminating IAB-donor performs the operation related to the partial migration.

It needs to be noted that the partial migration indication information further includes: a partial migration reason, in which the partial migration reason indicates that a reason of the partial migration is mobility of the IAB-node.

The operation related to the full migration includes, for example, creating a new logical DU, etc. The operation related to the partial migration includes, for example, sending an IAB transport migration management request message to the target IAB-donor, etc.

It needs to be noted that "in response to" and "if" have the same meaning in the present disclosure.

It needs to be noted that "carry" and "comprise/include" have the same meaning in the present disclosure. The term "comprise/include" in the present disclosure is an open limitation, that is, in addition to the content indicated in the present disclosure, it may also include the content that is not indicated in the present disclosure but may appear in the future.

The following is an example. As shown in FIG 12, which is a schematic diagram of determining a migration type by a non-F1-terminating IAB-donor. The migration type of the IAB-node in a last migration is a partial migration. FIG 12 includes S1201a to S1202b. At S1201a, the non-F1-terminating IAB-donor receives an XnAP message sent by an F1-terminating IAB-donor, in which the XnAP message includes the first assistance information (for example, IAB-node information). At S1201b, the non-F1-terminating IAB-donor receives an RRC message sent by the IAB-node, in which the RRC message includes the first assistance information. One of S1201a and S1201b may be executed. At S1202a, in response to a decision that the IAB-node performs the full migration, an F1AP message is sent to the IAB-node, and the F1AP message carries full migration indication information. At S1202b, in response to a decision that the IAB-node performs the partial migration, an F1AP message is sent to the F1-terminating IAB-donor, and the F1AP message carries partial migration indication information. One of S1202a and S1202b may be executed.

It needs to be noted that "carry" and "comprise/include" have the same meaning in the present disclosure. The term "comprise/include" in the present disclosure is an open limitation, that is, in addition to the content indicated in the present disclosure, it may also include the content that is not indicated in the present disclosure but may appear in the future.

In the method for determining a migration type in the embodiments of the present disclosure, the non-F1-terminating IAB-donor receives the first assistance information of the IAB-node and/or the second assistance information sent by the target IAB-donor; and determines the migration type of the IAB-node according to the first assistance information and/or the second assistance information, in which the migration type includes the full migration and the partial migration, and then the migration process is performed, which ensures a service quality of the terminal served by the IAB-node.

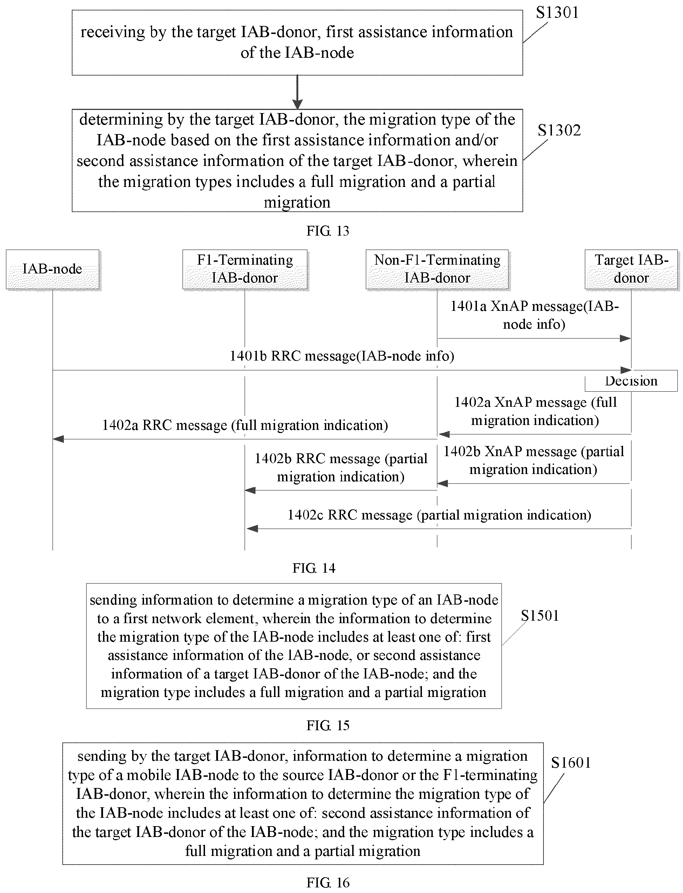

Please refer to FIG. 13, which is a flowchart of another method for determining a migration type according to the embodiments of the present disclosure. The method for determining a migration type may be executed by a target IAB-donor of an IAB-node. As shown in FIG 13, the method may include but is not limited to S1301 to S1302.

At S1301, the target IAB-donor receives first assistance information of the IAB-node.

In the embodiments of the present disclosure, a migration type of the IAB-node in a last migration may be a full migration or a partial migration.

It needs to be noted that S1301 is an optional step, that is, both S1301 and S1302 may be executed, or S1302 may be solely executed without S1301.

In the embodiments of the present disclosure, there may be at least two methods that the target IAB-donor receives the first assistance information of the IAB-node. In one example, the target IAB-donor may receive the first assistance information sent by the IAB-node. In another example, the target IAB-donor may receive the first assistance information sent by a non-F1-terminating IAB-donor of the IAB-node.

The target IAB-donor may receive an XnAP message sent by the non-F1-terminating IAB-donor, in which the XnAP message may carry the first assistance information. The target IAB-donor may receive an RRC message sent by the IAB-node, in which the RRC message may carry the first assistance information.

At S1302, the target IAB-donor determines the migration type of the IAB-node according to the first assistance information and/or second assistance information of the target IAB-donor, in which the migration types includes a full migration and a partial migration.

In the embodiments of the present disclosure, the first assistance information of the IAB-node may be context information of a terminal served by the IAB-node, in which the first assistance information may include at least one of: a number of terminals served by the IAB-node, a number of DRBs served by the IAB-node, a service bandwidth requirement on the IAB-node, a service delay requirement on the IAB-node, or information of a core network node.

In the embodiments of the present disclosure, the second assistance information of the target IAB-donor may be information related to a resource of the target IAB-donor, in which the second assistance information may include at least one of: resource information that the target IAB-donor may provide, or a resource state of the target IAB-donor.

The resource information that the target IAB-donor may provide may include at least one of: a number of terminals acceptable by the target IAB-donor, a number of DRBs acceptable by the target IAB-donor, a service bandwidth supportable by the target IAB-donor, or a service delay supportable by the target IAB-donor.

The resource state of the target IAB-donor may include at least one of: a number of terminals currently accepted by the target IAB-donor, a number of DRBs currently accepted by the target IAB-donor, a current service bandwidth of the target IAB-donor, or a current service delay of the target IAB-donor.

In the embodiments of the present disclosure, after S1302 is performed, the target IAB-donor may also perform following procedures: in response to the migration type being the full migration, sending full migration indication information to the IAB-node, in which the full migration indication information indicates the IAB-node to perform an operation related to the full migration; or in response to the migration type being the partial migration, sending partial migration indication information to a F1-terminating IAB-donor of the IAB-node, in which the partial migration indication information indicates the F1-terminating IAB-donor to perform an operation related to the partial migration.

It needs to be noted that in response to the migration type being the full migration, the target IAB-donor may send the full migration indication information to an IAB-MT in the IAB-node via the non-F1-terminating IAB-donor, in which the full migration indication information may be carried in an RRC message. The IAB-MT receives the RRC message. In response to the RRC message including the full migration indication information, the IAB-MT node where the IAB-MT is located performs the operation related to the full migration.

It needs to be noted that in response to the migration type being the partial migration, the target IAB-donor may send the partial migration indication information to the F1-terminating IAB-donor via the non-F1-terminating IAB-donor, or send the partial migration indication information to the F1-terminating IAB-donor directly, in which the partial migration indication information may be carried in an XnAP message. The F1-terminating IAB-donor receives the XnAP message. In response to the XnAP message including the partial migration indication information, the F1-terminating IAB-donor performs the operation related to the partial migration.

It needs to be noted that the partial migration indication information further includes: a partial migration reason, in which the partial migration reason indicates that a reason of the partial migration is mobility of the IAB-node.

The operation related to the full migration includes, for example, creating a new logical DU, etc. The operation related to the partial migration includes, for example, sending an IAB transport migration management request message to the target IAB-donor, etc.

It needs to be noted that "in response to" and "if" have the same meaning in the present disclosure.

It needs to be noted that "carry" and "comprise/include" have the same meaning in the present disclosure. The term "comprise/include" in the present disclosure is an open limitation, that is, in addition to the content indicated in the present disclosure, it may also include the content that is not indicated in the present disclosure but may appear in the future.

The following is an example. As shown in FIG 14, which is a schematic diagram of determining a migration type by a target IAB-donor. The migration type of the IAB-node in a last migration is a partial migration. FIG. 14 includes S1401a to S1402c. At S1401a, a non-F1-terminating IAB-donor sends an XnAP message to the target IAB-donor, in which the XnAP message includes the first assistance information, for example, IAB-node information (info). At S1401b, the IAB-node sends an RRC message to the target IAB-donor, in which the RRC message includes the first assistance information. One of S1401a and S1401b may be executed. At S1402a, in response to a decision that the IAB-node performs the full migration, an XnAP message is sent to the non-F1-terminating IAB-donor, in which the XnAP message carries full migration indication information; and the RRC message with the full migration indication information is then sent by the non-F1-terminating IAB-donor to the IAB-node. At S1402b, in response to a decision that the IAB-node performs the partial migration, an XnAP message is sent to the non-F1-terminating IAB-donor, in which the XnAP message carries partial migration indication information; and the RRC message with the partial migration indication information is then sent by the non-F1-terminating IAB-donor to an F1-terminating IAB-donor. At S1402c, in response to a decision that the IAB-node performs the partial migration, an RRC message with partial migration indication information is sent to an F1-terminating IAB-donor. One of S1402a, S1402b, and S1402c may be performed.

In the method for determining a migration type in the embodiments of the present disclosure, the target IAB-donor receives the first assistance information of the IAB-node; and determines the migration type of the IAB-node according to the first assistance information and/or the second assistance information of the target IAB-donor, in which the migration type includes the full migration and the partial migration, and then the migration process is performed, which ensures a service quality of the terminal served by the IAB-node.

Please refer to FIG. 15, which is a flowchart of a method for determining a migration type according to the embodiments of the present disclosure. The method for determining a migration type is executed by a second network element. As shown in FIG. 15, the method may include but is not limited to S1501.

At S1501, information to determine a migration type of an IAB-node is sent to a first network element, in which the information to determine the migration type of the IAB-node includes at least one of: first assistance information of the IAB-node, or second assistance information of a target IAB-donor of the IAB-node; and the migration type includes a full migration and a partial migration.

In the embodiments of the present disclosure, the first assistance information of the IAB-node may be context information of a terminal served by the IAB-node. The first assistance information may include at least one of: a number of terminals served by the IAB-node, a number of DRBs served by the IAB-node, a service bandwidth requirement on the IAB-node, a service delay requirement on the IAB-node, or information of a core network node.

The information of the core network node may include at least one piece of: information of a control plane node of the core network or information of a user plane node of the core network. For example, the information of the control plane node of the core network may be an ID of the control plane node, transmission network address information, or the like. For example, the information of the user plane node of the core network may be an ID of the user plane node, transmission network address information or the like.

In the embodiments of the present disclosure, the second assistance information of the target IAB-donor may be information related to a resource of the target IAB-donor. The second assistance information may include at least one of: resource information that the target IAB-donor may provide, or a resource state of the target IAB-donor.

The resource information that the target IAB-donor may provide may include at least one of: a number of terminals acceptable by the target IAB-donor, a number of DRBs acceptable by the target IAB-donor, a service bandwidth supportable by the target IAB-donor, or a service delay supportable by the target IAB-donor.

The resource state of the target IAB-donor may include at least one of: a number of terminals currently accepted by the target IAB-donor, a number of DRBs currently accepted by the target IAB-donor, a current service bandwidth of the target IAB-donor, or a current service delay of the target IAB-donor.

In the embodiments of the present disclosure, the service delay supportable by the target IAB-donor includes a transmission network delay between the target IAB-donor and a core network node, in which the transmission network delay is confirmed by the target IAB-donor according to information of the core network node; and the information of the core network node is provided by the IAB-node, or a source IAB-donor when the migration type of the IAB-node in a last migration is the full migration.

In the embodiments of the present disclosure, the first network element may be any one of: a network element when the migration type of the IAB-node in the last migration is the full migration, or a network element when the migration type of the IAB-node in the last migration is the partial migration.

The network element when the migration type of the IAB-node in the last migration is the full migration, for example, may be a source IAB donor, the IAB-node, or a target IAB-node donor of the IAB-node.

The network element when the migration type of the IAB-node in the last migration is the partial migration, for example, is an F1 terminating IAB-donor of the IAB-node, the IAB-node, a non-F1 terminating IAB-donor of the IAB-node, the target IAB-donor of the IAB-node.

In the embodiments of the present disclosure, it needs to be noted that after the first network element determines the migration type, a corresponding network element may perform an operation related to the migration according to indication of the migration type. For example, in response to the migration type of the IAB-node in the last migration being the full migration and the migration type being the full migration, full migration indication information may be sent to the IAB-node, in which the full migration indication information indicates the IAB-node to perform an operation related to the full migration; and in response to the migration type being the partial migration, partial migration indication information may be sent to the source IAB-donor of the IAB-node, in which the partial migration indication information indicates the source IAB-donor to perform an operation related to the partial migration.

For example, in response to the migration type of the IAB-node in the last migration being the partial migration and the migration type being the full migration, full migration indication information is sent to the IAB-node, in which the full migration indication information indicates the IAB-node to perform an operation related to the full migration; or in response to the migration type being the partial migration, partial migration indication information is sent to an F1-terminating IAB-donor of the IAB-node, in which the partial migration indication information indicates the F1-terminating IAB-donor to perform an operation related to the partial migration.

In the embodiments of the present disclosure, in response to the first network element being the source IAB-donor of the IAB-node, the second network element may be the target IAB-donor; in response to the first network element being the IAB-node, the second network element may be the target IAB-donor; and in response to the first network element being the target IAB-donor of the IAB-node, the second network element may be the IAB-node or the non-F1 terminating IAB-donor of the IAB-node.

In response to the first network element being the non-F1 terminating IAB-donor of the IAB-node, the second network element may be the target IAB-donor, the IAB-node, or the F1-terminating IAB-donor of the IAB-node.

It needs to be noted that in the present disclosure, if a migration performed is the partial migration, the "target IAB-donor" may also be called a "target non-F1 terminating IAB-donor".

In the method for determining a migration type in the embodiments of the present disclosure, the second network element may send the information to determine the migration type of the mobile IAB-node to the first network element, in which the information to determine the migration type of the IAB-node includes at least one of: the first assistance information of the IAB-node, or the second assistance information of the target IAB-donor of the IAB-node, in which the migration type includes the full migration and the partial migration, and then the migration process is performed, which ensures the service quality of the terminal served by the IAB-node.

Please refer to FIG. 16, which is a flowchart of a method for determining a migration type according to the embodiments of the present disclosure. In this example, the first network element may be a source IAB-donor of an IAB-node when a migration type of the IAB-node in a last migration is a full migration, or the first network element may be a F1-terminating IAB-donor of an IAB-node when a migration type of the IAB-node in a last migration is a partial migration. Correspondingly, the method for determining a migration type in FIG. 16 is executed by a target IAB-donor. As shown in FIG 16, the method may include but is not limited to S1601.

At S1601, the target IAB-donor sends information to determine a migration type of a IAB-node to the source IAB-donor or the F1-terminating IAB-donor, in which the information to determine the migration type of the IAB-node includes at least one of: second assistance information of the target IAB-donor of the IAB-node; and the migration type includes a full migration and a partial migration.

In the embodiments of the present disclosure, for the second assistance information, in one example, the target IAB-donor may send the second assistance information of the target IAB-donor and IAB-node context update information to the first network element, in which the second assistance information is configured to determine the migration type of the IAB-node, and the IAB-node context update information indicates to the first network element that an IAB-MT switches to the target IAB-donor. In another example, the target IAB-donor may send the second assistance information of the target IAB-donor to the first network element, in which the second assistance information is configured to determine the migration type of the IAB-node, and indicates to the first network element that an IAB-MT switches to the target IAB-donor.

In the above two examples, the target IAB-donor may send an XnAP message to the source IAB-donor or the F1-terminating IAB-donor, in which the XnAP message carries the second assistance information and/or the IAB-node context update information.

In the embodiments of the present disclosure, the source IAB-donor or the F1-terminating IAB-donor may obtain the first assistance information in advance.

It needs to be noted that the IAB-MT switching to the target IAB-donor may mean that the IAB-MT is switching to the target IAB-donor, or the IAB-MT has switched to the target IAB-donor.

In the embodiments of the present disclosure, the second assistance information of the target IAB-donor may be information related to a resource of the target IAB-donor. The second assistance information may include at least one of: resource information that the target IAB-donor may provide, or a resource state of the target IAB-donor.

The resource information that the target IAB-donor may provide may include at least one of: a number of terminals acceptable by the target IAB-donor, a number of DRBs acceptable by the target IAB-donor, a service bandwidth supportable by the target IAB-donor, or a service delay supportable by the target IAB-donor.

The resource state of the target IAB-donor may include at least one of: a number of terminals currently accepted by the target IAB-donor, a number of DRBs currently accepted by the target IAB-donor, a current service bandwidth of the target IAB-donor, or a current service delay of the target IAB-donor.

It needs to be noted that "carry" and "comprise/include" have the same meaning in the present disclosure. The term "comprise/include" in the present disclosure is an open limitation, that is, in addition to the content indicated in the present disclosure, it may also include the content that is not indicated in the present disclosure but may appear in the future.

In the method for determining a migration type in the embodiments of the present disclosure, the target IAB-donor may send the information to determine the migration type of the IAB-node to the source IAB-donor or the F1-terminating IAB-donor, in which the information to determine the migration type of the IAB-node includes the second assistance information of the target IAB-donor of the IAB-node; and the migration type includes the full migration and the partial migration, and then the migration process is performed, which ensures the service quality of the terminal served by the IAB-node.

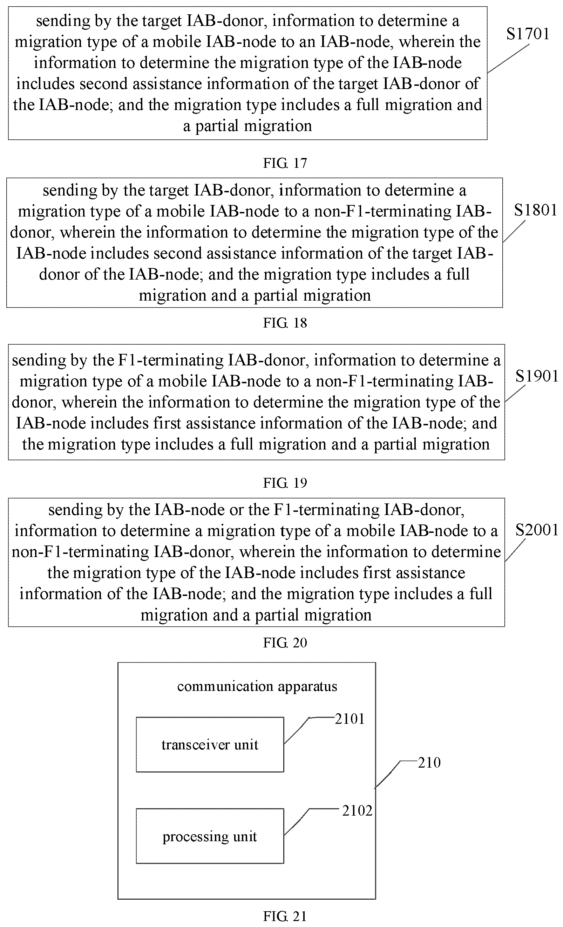

Please refer to FIG. 17, which is a flowchart of another method for determining a migration type according to the embodiments of the present disclosure. In this example, a first network element may be an IAB-node. Correspondingly, the method for determining a migration type in FIG. 17 may be executed by a target IAB-donor. As shown in FIG 17, the method may include but is not limited to S1701.

At S1701, the target IAB-donor sends information to determine a migration type of a IAB-node to an IAB-node, in which the information to determine the migration type of the IAB-node includes second assistance information of the target IAB-donor of the IAB-node; and the migration type includes a full migration and a partial migration.

In the embodiments of the present disclosure, the migration type of the IAB-node in a last migration may be the full migration or the partial migration.

In the embodiments of the present disclosure, the target IAB-donor may send an XnAP message to the IAB-node, in which the XnAP message carries the second assistance information.

In the embodiments of the present disclosure, the IAB-node may obtain first assistance information in advance.

It needs to be noted that the IAB-MT switching to the target IAB-donor may mean that the IAB-MT is switching to the target IAB-donor, or that the IAB-MT has switched to the target IAB-donor.

In the embodiments of the present disclosure, the second assistance information of the target IAB-donor may be information related to a resource of the target IAB-donor. The second assistance information may include at least one of: resource information that the target IAB-donor may provide, or a resource state of the target IAB-donor.

The resource information that the target IAB-donor may provide may include at least one of: a number of terminals acceptable by the target IAB-donor, a number of DRBs acceptable by the target IAB-donor, a service bandwidth supportable by the target IAB-donor, or a service delay supportable by the target IAB-donor.

The resource state of the target IAB-donor may include at least one of: a number of terminals currently accepted by the target IAB-donor, a number of DRBs currently accepted by the target IAB-donor, a current service bandwidth of the target IAB-donor, or a current service delay of the target IAB-donor.

It needs to be noted that "carry" and "comprise/include" have the same meaning in the present disclosure. The term "comprise/include" in the present disclosure is an open limitation, that is, in addition to the content indicated in the present disclosure, it may also include the content that is not indicated in the present disclosure but may appear in the future.

In the method for determining a migration type in the embodiments of the present disclosure, the target IAB-donor may send the information to determine the migration type of the IAB-node to the IAB-node, in which the information to determine the migration type of the IAB-node includes the second assistance information of the target IAB-donor of the IAB-node; and the migration type includes the full migration and the partial migration, and then the migration process is performed, which ensures the service quality of the terminal served by the IAB-node.

Please refer to FIG. 18, which is a flowchart of another method for determining a migration type according to the embodiments of the present disclosure. In this example, a first network element may be a non-F1-terminating IAB-donor of an IAB-node when the migration type of the IAB-node in a last migration is a partial migration. Correspondingly, the method for determining a migration type in FIG 18 may be executed by a target IAB-donor. The method for determining a migration type is executed by a first network element. As shown in FIG. 18, the method may include but is not limited to S1801.

At S1801, the target IAB-donor sends information to determine a migration type of a IAB-node to a non-F1-terminating IAB-donor, in which the information to determine the migration type of the IAB-node includes second assistance information of the target IAB-donor of the IAB-node; and the migration type includes a full migration and a partial migration.

In the embodiments of the present disclosure, the second assistance information of the target IAB-donor may be information related to a resource of the target IAB-donor. The second assistance information may include at least one of: resource information that the target IAB-donor may provide, or a resource state of the target IAB-donor.

The resource information that the target IAB-donor may provide may include at least one of: a number of terminals acceptable by the target IAB-donor, a number of DRBs acceptable by the target IAB-donor, a service bandwidth supportable by the target IAB-donor, or a service delay supportable by the target IAB-donor.

The resource state of the target IAB-donor may include at least one of: a number of terminals currently accepted by the target IAB-donor, a number of DRBs currently accepted by the target IAB-donor, a current service bandwidth of the target IAB-donor, or a current service delay of the target IAB-donor.

In the method for determining a migration type in the embodiments of the present disclosure, the target IAB-donor sends the information to determine the migration type of the IAB-node to the non-F1-terminating IAB-donor, in which the information to determine the migration type of the IAB-node includes the second assistance information of the target IAB-donor of the IAB-node; and the migration type includes the full migration and the partial migration, and then the migration process is performed, which ensures the service quality of the terminal served by the IAB-node.

Please refer to FIG. 19, which is a flowchart of another method for determining a migration type according to the embodiments of the present disclosure. In this example, a first network element may be a non-F1-terminating IAB-donor of an IAB-node when the migration type of the IAB-node in a last migration is a partial migration. Correspondingly, the method for determining a migration type in FIG 19 may be executed by a target IAB-donor. The method for determining a migration type is executed by an F1-terminating IAB-donor. As shown in FIG. 19, the method may include but is not limited to S1901.

At S1901, the F1-terminating IAB-donor sends information to determine a migration type of a IAB-node to a non-F1-terminating IAB-donor, in which the information to determine the migration type of the IAB-node includes first assistance information of the IAB-node; and the migration type includes a full migration and a partial migration.

In the embodiments of the present disclosure, the F1-terminating IAB-donor may send an XnAP message to the non-F1-terminating IAB-donor, in which the XnAP message carries the first assistance information, and the XnAP message may be a handover request message or other XnAP messages.

In the embodiments of the present disclosure, the first assistance information of the IAB-node may be context information of a terminal served by the IAB-node. The first assistance information may include at least one of: a number of terminals served by the IAB-node, a number of DRBs served by the IAB-node, a service bandwidth requirement on the IAB-node, a service delay requirement on the IAB-node, or information of a core network node.

In the method for determining a migration type in the embodiments of the present disclosure, the F1-terminating IAB-donor sends the information to determine the migration type of the IAB-node to the non-F1-terminating IAB-donor, in which the information to determine the migration type of the IAB-node includes first assistance information of the IAB-node; and the migration type includes the full migration and the partial migration, and then the migration process is performed, which ensures the service quality of the terminal served by the IAB-node.

Please refer to FIG. 20, which is a flowchart of another method for determining a migration type according to the embodiments of the present disclosure. In this example, a first network element may be a target IAB-donor of an IAB-node. Correspondingly, the method for determining a migration type in FIG 20 may be executed by the IAB-donor or a non-F1-terminating IAB-donor of the IAB-node. As shown in FIG. 20, the method may include but is not limited to S2001.

At S2001, the IAB-node or the non-F1-terminating IAB-donor sends information to determine a migration type of a IAB-node to the target IAB-donor, in which the information to determine the migration type of the IAB-node includes first assistance information of the IAB-node; and the migration type includes a full migration and a partial migration.

In the embodiments of the present disclosure, the non-F1-terminating IAB-donor may send an XnAP message to the target IAB-donor, in which the XnAP message may carry the first assistance information.

In the embodiments of the present disclosure, the IAB-node may send an RRC message to the target IAB-donor, in which the RRC message may carry the first assistance information.

In the embodiments of the present disclosure, the first assistance information of the IAB-node may be context information of a terminal served by the IAB-node. The first assistance information may include at least one of: a number of terminals served by the IAB-node, a number of DRBs served by the IAB-node, a service bandwidth requirement on the IAB-node, a service delay requirement on the IAB-node, or information of a core network node.

It needs to be noted that "carry" and "comprise/include" have the same meaning in the present disclosure. The term "comprise/include" in the present disclosure is an open limitation, that is, in addition to the content indicated in the present disclosure, it may also include the content that is not indicated in the present disclosure but may appear in the future.

In the method for determining a migration type in the embodiments of the present disclosure, the IAB-node or the non-F1-terminating IAB-donor sends the information to determine the migration type of the IAB-node to the target IAB-donor, in which the information to determine the migration type of the IAB-node includes the first assistance information of the IAB-node; and the migration type includes the full migration and the partial migration, and then the migration process is performed, which ensures the service quality of the terminal served by the IAB-node.

In the above embodiments of the present disclosure, the methods in the embodiments of the present disclosure are introduced respectively from the perspective of the first network element and the second network element. In order to realize the functions of the methods in the above embodiments of the present disclosure, the network device may include a hardware structure, and a software module, so that the above functions are implemented in a form of the hardware structure, the software module, or the hardware structure plus the software module. Some of these functions may be implemented in the form of the hardware structure, the software module, or the hardware structure plus the software module.

Please refer to FIG. 21, which is a block diagram of a communication apparatus 210 according to the embodiments of the present disclosure. The communication apparatus 210 in the FIG. 21 may include a transceiver unit 2101 and a processing unit 2102. The transceiver unit 2101 may include a transmitting unit and/or a receiving unit. The transmitting unit is configured to achieve a transmitting function, the receiving unit is configured to achieve a receiving function, and the transceiver unit 2101 may achieve the transmitting function and/or the receiving function.

The communication apparatus 210 may be a network device (such as, the first network element or the second network element in the above method embodiments), an apparatus in the network device, or a device being used in match with the network device.

When the communication apparatus 210 is a network device (such as, the first network element in the above method embodiments), a processing unit 2102 is configured to determine a migration type of a mobile IAB-node according to first assistance information of the IAB-node and/or second assistance information of a target IAB-donor of the IAB-node, in which the migration type includes a full migration and a partial migration.

Optionally, the first assistance information is context information of a terminal served by the IAB-node.

Optionally, the first assistance information includes at least one of: a number of terminals served by the IAB-node, a number of DRBs served by the IAB-node, a service bandwidth requirement on the IAB-node, a service delay requirement on the IAB-node, or information of a core network node.

Optionally, the second assistance information is information related to a resource of the target IAB-donor.

Optionally, the second assistance information includes at least one of: resource information that the target IAB-donor may provide, or a resource state of the target IAB-donor, in which the resource information that the target IAB-donor may provide includes at least one of: a number of terminals acceptable by the target IAB-donor, a number of DRBs acceptable by the target IAB-donor, a service bandwidth supportable by the target IAB-donor, or a service delay supportable by the target IAB-donor; and the resource state of the target IAB-donor includes at least one of: a number of terminals currently accepted by the target IAB-donor, a number of DRBs currently accepted by the target IAB-donor, a current service bandwidth of the target IAB-donor, or a current service delay of the target IAB-donor.

Optionally, the service delay supportable by the target IAB-donor includes a transmission network delay between the target IAB-donor and a core network node, in which the transmission network delay is confirmed by the target IAB-donor according to information of the core network node; and the information of the core network node is provided by the IAB-node, or a source IAB-donor when the migration type of the IAB-node in a last migration is the full migration.

Optionally, the migration type of the IAB-node in a last migration is the full migration, and the first network element is a source IAB-donor of the IAB-node; or the migration type of the IAB-node in the last migration is the partial migration, and the first network element is an F1-terminating IAB-donor of the IAB-node.

Optionally, a transceiver unit 2101 is configured to receive the second assistance information and IAB-node context update information sent by the target IAB-donor, in which the second assistance information is configured to determine the migration type of the IAB-node, and the IAB-node context update information indicates to the first network element that an IAB-MT switches to the target IAB-donor.

Optionally, the transceiver unit 2101 is further configured to receive the second assistance information sent by the target IAB-donor, in which the second assistance information is configured to determine the migration type of the IAB-node, and the second assistance information further indicates to the first network element that an IAB-MT switches to the target IAB-donor.

Optionally, the processing unit 2102 is further configured to determine the first assistance information of the IAB-node, in which the first assistance information is configured to determine the migration type of the IAB-node.

Optionally, the transceiver unit 2101 is further configured to in response to the migration type being the full migration, send full migration indication information to the IAB-node, in which the full migration indication information indicates the IAB-node to perform an operation related to the full migration; or the processing unit 2102 is further configured to in response to the migration type being the partial migration, perform an operation related to the partial migration.

Optionally, the first network element is the IAB-node.

Optionally, the transceiver unit 2101 is further configured to receive the second assistance information sent by the target IAB-donor, in which the second assistance information is configured to determine the migration type of the IAB-node.

Optionally, the processing unit 2102 is further configured to in response to the migration type being the full migration, perform an operation related to the full migration; or the transceiver unit 2101 is further configured to in response to the migration type being the partial migration and the migration type of the IAB-node in a last migration being the full migration, send partial migration indication information to a source IAB-donor of the IAB-node; or the transceiver unit 2101 is further configured to in response to the migration type being the partial migration and the migration type of the IAB-node in a last migration being the partial migration, send partial migration indication information to an F1-terminating IAB-donor of the IAB-node, in which the partial migration indication information indicates to perform an operation related to the partial migration.

Optionally, the migration type of the IAB-node in a last migration is the partial migration, and the first network element is a non-F1-terminating IAB-donor of the IAB-node.

Optionally, the transceiver unit 2101 is further configured to receive the second assistance information sent by the target IAB-donor, in which the second assistance information is configured to determine the migration type of the IAB-node.

Optionally, the transceiver unit 2101 is further configured to receive the first assistance information of the IAB-node, in which the first assistance information is configured to determine the migration type of the IAB-node.

Optionally, the transceiver unit 2101 is specifically configured to receive the first assistance information sent by an F1-terminating IAB-donor of the IAB-node; or receive the first assistance information sent by the IAB-node.

Optionally, the transceiver unit 2101 is specifically configured to in response to the migration type being the full migration, send full migration indication information to the IAB-node, in which the full migration indication information indicates the IAB-node to perform an operation related to the full migration; or in response to the migration type being the partial migration, send partial migration indication information to an F1-terminating IAB-donor of the IAB-node, in which the partial migration indication information indicates the F1-terminating IAB-donor to perform an operation related to the partial migration.

Optionally, the first network element is the target IAB-donor of the IAB-node.

Optionally, the transceiver unit 2101 is further configured to receive the first assistance information of the IAB-node, in which the first assistance information is configured to determine the migration type of the IAB-node.

Optionally, the transceiver unit 2101 is specifically configured to receive the first assistance information sent by the IAB-node; or receive the first assistance information sent by a non-F1-terminating IAB donor of the IAB-node.

Optionally, the transceiver unit 2101 is further configured to in response to the migration type being the full migration, send full migration indication information to the IAB-node, in which the full migration indication information indicates the IAB-node to perform an operation related to the full migration; or in response to the migration type being the partial migration, send partial migration indication information to an F1-terminating IAB-donor of the IAB-node, in which the partial migration indication information indicates the F1-terminating IAB-donor to perform an operation related to the partial migration.

Optionally, the partial migration indication information further includes: a partial migration reason, in which the partial migration reason indicates that a reason of the partial migration is mobility of the IAB-node.

When the communication apparatus 210 is a network device (such as, the second network element in the above method embodiments), a transceiver unit 2101 is configured to send information to determine a migration type of a mobile IAB-node to a first network element, in which the information to determine the migration type of the IAB-node includes at least one of: first assistance information of the IAB-node, or second assistance information of a target IAB-donor of the IAB-node; and the migration type includes a full migration and a partial migration.

Optionally, the first assistance information is context information of a terminal served by the IAB-node.

Optionally, the first assistance information includes at least one of: a number of terminals served by the IAB-node, a number of DRBs served by the IAB-node, a service bandwidth requirement on the IAB-node, or a service delay requirement on the IAB-node.

Optionally, the second assistance information is information related to a resource of the target IAB-donor.

Optionally, the second assistance information includes at least one of: resource information that the target IAB-donor may provide, or a resource state of the target IAB-donor, in which the resource information that the target IAB-donor may provide includes at least one of: a number of terminals acceptable by the target IAB-donor, a number of DRBs acceptable by the target IAB-donor, a service bandwidth supportable by the target IAB-donor, or a service delay supportable by the target IAB-donor; and the resource state of the target IAB-donor includes at least one of: a number of terminals currently accepted by the target IAB-donor, a number of DRBs currently accepted by the target IAB-donor, a current service bandwidth of the target IAB-donor, or a current service delay of the target IAB-donor.

Optionally, the service delay supportable by the target IAB-donor includes a transmission network delay between the target IAB-donor and a core network node, in which the transmission network delay is confirmed by the target IAB-donor according to information of the core network node; and the information of the core network node is provided by the IAB-node, or a source IAB-donor when the migration type of the IAB-node in a last migration is the full migration.

Optionally, the migration type of the IAB-node in a last migration is the full migration, and the first network element is a source IAB-donor of the IAB-node; or the migration type of the IAB-node in the last migration is the partial migration, and the first network element is an F1-terminating IAB-donor of the IAB-node.

Optionally, when the second network element is the target IAB-donor, the transceiver unit 2101 is configured to send the second assistance information and IAB-node context update information to the target IAB-donor, in which the second assistance information is configured to determine the migration type of the IAB-node, and the IAB-node context update information indicates to the first network element that an IAB-MT switches to the target IAB-donor.

Optionally, when the second network element is the target IAB-donor, the transceiver unit 2101 is further configured to send the second assistance information of the target IAB-donor to the first network element, in which the second assistance information is configured to determine the migration type of the IAB-node, and the second assistance information further indicates to the first network element that an IAB-MT switches to the target IAB-donor.

Optionally, the first network element is the IAB-node.

Optionally, when the second network element is the target IAB-donor, the transceiver unit 2101 is further configured to send the second assistance information of the target IAB-donor to the first network element, in which the second assistance information is configured to determine the migration type of the IAB-node.

Optionally, the migration type of the IAB-node in a last migration is the partial migration, and the first network element is a non-F1-terminating IAB-donor of the IAB-node.

Optionally, when the second network element is the target IAB-donor, the transceiver unit 2101 is further configured to send the second assistance information of the target IAB-donor to the first network element, in which the second assistance information is configured to determine the migration type of the IAB-node.

Optionally, when the second network element is the IAB-node or an F1-terminating IAB donor of the IAB-node, the transceiver unit 2101 is further configured to send the first assistance information of the IAB-node to the first network element, in which the first assistance information is configured to determine the migration type of the IAB-node.

Optionally, the first network element is the target IAB-donor of the IAB-node.

Optionally, when the second network element is the IAB-node or a non-F1-terminating IAB donor of the IAB-node, the transceiver unit 2101 is further configured to send the first assistance information of the IAB-node to the first network element, in which the first assistance information is configured to determine the migration type of the IAB-node.

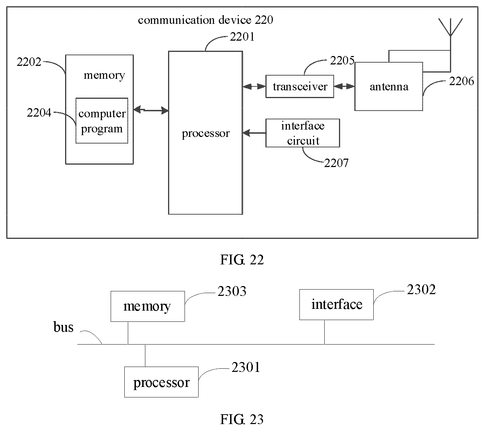

Please refer to FIG. 22, which is a block diagram of another communication device 220 according to the embodiments of the present disclosure. The communication device 220 may be a network device (such as, the first network element or the second network element in the above method embodiments), or a chip, a chip system, a processor, etc. that supports the network device to implement the above method. The device is configured to implement the method in the above method embodiments. For details, please refer to the description in the above method embodiments.

The communication device 220 may include one or more processors 2201. The processor 2201 may be a general-purpose processor or a special-purpose processor. For example, it may be a baseband processor or a central processing unit. The baseband processor may be configured to process communication protocols and communication data, and the central processor may be configured to control communication devices (such as base stations, baseband chips, terminals, terminal chips, DU or CU, etc.) to execute computer programs and process computer program data.

Optionally, the communication device 220 may also include one or more memories 2202 on which a computer program 2204 may be stored. When the computer program 2204 is executed by the processor 2201, the communication device 220 is caused to implement the method in the above method embodiments. Optionally, the memory 2202 may also store data. The communication device 220 and the memory 2202 may be set separately or integrated together.

Optionally, the communication device 220 includes a transceiver 2205 and an antenna 2206. The transceiver 2205 may be called a transceiving unit, a transceiving machine, or a transceiving circuit, etc., to achieve a transceiving function. The transceiver 2205 may include a receiver and a transmitter. The receiver may be called a receiver or a receiving circuit, etc., to achieve the receiving function; and the transmitter may be called a transmitter or a transmitting circuit, etc., to achieve the transmitting function.

Optionally, the communication device 220 includes one or more interface circuits 2207. The interface circuit 2207 is configured to receive code instructions and transmit the code instructions to the processor 2201. When the code instructions are running on the processor 2201, the communication device 220 is caused to implement the method in the above method embodiments.

When the communication device 220 is a network device (such as, the first network element in the above method embodiments), the transceiver 2205 is configured to execute S601 in FIG. 6; S701 in FIG 7; S801 and S802 in FIG. 8; S901 in FIG. 9; S1001 and S1002 in FIG 10; S1101 in FIG 11; S1201a, S1201b, S1202a, and S1202b in FIG 12; S1301 in FIG 13; and S1401a, S1401b, S1402a, S1402b, and S1402c in FIG 14.

The processor 2201 is configured to execute S501 in FIG.5; S601 and S602 in FIG 6; S701 and S702 in FIG 7; S902 in FIG9; S1102 in FIG. 11; and S1302 in FIG. 13.

When the communication device 220 is a network device (such as, the second network element in the above method embodiments), the transceiver 2205 is configured to execute S1501 in FIG. 15; S1601 in FIG 16; S1701 in FIG 17; S1801 in FIG. 18; S1901 in FIG. 19; and S2001 in FIG 20.

In an implementation, the processor 2201 may include a transceiver configured to achieve the receiving and transmitting function. For example, the transceiver may be a transceiving circuit, or an interface, or an interface circuit. The transceiving circuit, the interface, or the interface circuit configured to achieve the receiving and transmitting function may be set separately or integrated together. The transceiving circuit, the interface or the interface circuit may be configured to read and write code/data, or the transceiving circuit, the interface or the interface circuit may be configured to transmit signals.

In an implementation, the processor 2201 may store a computer program 2203. When the computer program 2203 is running on the processor 2201, the communication device 220 is caused to implement the method in the above method embodiments. The computer program 2203 may be solidified in the processor 2201. In this way, the processor 2201 may be implemented in hardware.

In an implementation, the communication device 220 may include a circuit that may achieve the transmitting or receiving or communicating function in the above method embodiments. The processor and transceiver in the present disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device in the above embodiments may be a network device (such as, the first network element or the second network element in the above method embodiments), but the scope of the communication device in the present disclosure is not limited to this, and the structure of the communication device may not be restricted by FIG. 22. The communication device may be an independent device or part of a larger device. For example, the communication device may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication device may be a chip or a chip system, please refer to the FIG. 23, which is a block diagram of a chip according to the embodiments of the present disclosure. The chip in the FIG 23 includes a processor 2301 and an interface 2302. There may be one or more processors 2301, and there may be a plurality of interfaces 2302.

For the case where the chip is configured to achieve functions of the network device (such as, the first network element in the above method embodiments) in the embodiments of the present disclosure, the interface 2302 is configured to obtain first assistance information of a mobile IAB-node and/or second assistance information of a target IAB-donor of the IAB-node, and determine a migration type of the IAB-node; in which the migration type includes a full migration and a partial migration.

Optionally, the first assistance information is context information of a terminal served by the IAB-node.

Optionally, the first assistance information includes at least one of: a number of terminals served by the IAB-node, a number of DRBs served by the IAB-node, a service bandwidth requirement on the IAB-node, a service delay requirement on the IAB-node, or information of a core network node.

Optionally, the second assistance information is information related to a resource of the target IAB-donor.

Optionally, the second assistance information includes at least one of: resource information that the target IAB-donor may provide, or a resource state of the target IAB-donor, in which the resource information that the target IAB-donor may provide includes at least one of: a number of terminals acceptable by the target IAB-donor, a number of DRBs acceptable by the target IAB-donor, a service bandwidth supportable by the target IAB-donor, or a service delay supportable by the target IAB-donor; and the resource state of the target IAB-donor includes at least one of: a number of terminals currently accepted by the target IAB-donor, a number of DRBs currently accepted by the target IAB-donor, a current service bandwidth of the target IAB-donor, or a current service delay of the target IAB-donor.

Optionally, the service delay supportable by the target IAB-donor includes a transmission network delay between the target IAB-donor and a core network node, in which the transmission network delay is confirmed by the target IAB-donor according to information of the core network node; and the information of the core network node is provided by the IAB-node, or a source IAB-donor when the migration type of the IAB-node in a last migration is the full migration.

Optionally, the migration type of the IAB-node in a last migration is the full migration, and the first network element is a source IAB-donor of the IAB-node; or the migration type of the IAB-node in the last migration is the partial migration, and the first network element is an F1-terminating IAB-donor of the IAB-node.

Optionally, the interface 2302 is configured to receive the second assistance information and IAB-node context update information sent by the target IAB-donor, in which the second assistance information is configured to determine the migration type of the IAB-node, and the IAB-node context update information indicates to the first network element that an IAB-MT switches to the target IAB-donor.

Optionally, the interface 2302 is configured to receive the second assistance information sent by the target IAB-donor, in which the second assistance information is configured to determine the migration type of the IAB-node, and the second assistance information further indicates to the first network element that an IAB-MT switches to the target IAB-donor.

Optionally, the interface 2302 is configured to in response to the migration type being the full migration, send full migration indication information to the IAB-node, in which the full migration indication information indicates the IAB-node to perform an operation related to the full migration.

Optionally, the first network element is the IAB-node.

Optionally, the interface 2302 is configured to receive the second assistance information sent by the target IAB-donor, in which the second assistance information is configured to determine the migration type of the IAB-node.

Optionally, the interface 2302 is configured to in response to the migration type being the partial migration and the migration type of the IAB-node in a last migration being the partial migration, send partial migration indication information to an F1-terminating IAB-donor of the IAB-node, in which the partial migration indication information indicates to perform an operation related to the partial migration.

Optionally, the migration type of the IAB-node in a last migration is the partial migration, and the first network element is a non-F1-terminating IAB-donor of the IAB-node.

Optionally, the interface 2302 is configured to receive the second assistance information sent by the target IAB-donor, in which the second assistance information is configured to determine the migration type of the IAB-node.

Optionally, the interface 2302 is configured to receive the first assistance information of the IAB-node, in which the first assistance information is configured to determine the migration type of the IAB-node.

Optionally, the interface 2302 is configured to receive the first assistance information sent by an F1-terminating IAB-donor of the IAB-node; or receive the first assistance information sent by the IAB-node.

Optionally, the interface 2302 is configured to in response to the migration type being the full migration, send full migration indication information to the IAB-node, in which the full migration indication information indicates the IAB-node to perform an operation related to the full migration; or in response to the migration type being the partial migration, send partial migration indication information to an F1-terminating IAB-donor of the IAB-node, in which the partial migration indication information indicates the F1-terminating IAB-donor to perform an operation related to the partial migration.

Optionally, the first network element is the target IAB-donor of the IAB-node.

Optionally, the interface 2302 is configured to receive the first assistance information of the IAB-node, in which the first assistance information is configured to determine the migration type of the IAB-node.

Optionally, the interface 2302 is configured to receive the first assistance information sent by the IAB-node; or receive the first assistance information sent by a non-F1-terminating IAB donor of the IAB-node.

Optionally, the interface 2302 is configured to in response to the migration type being the full migration, send full migration indication information to the IAB-node, in which the full migration indication information indicates the IAB-node to perform an operation related to the full migration; or in response to the migration type being the partial migration, send partial migration indication information to an F1-terminating IAB-donor of the IAB-node, in which the partial migration indication information indicates the F1-terminating IAB-donor to perform an operation related to the partial migration.

Optionally, the partial migration indication information further includes: a partial migration reason, in which the partial migration reason indicates that a reason of the partial migration is mobility of the IAB-node.

For the case where the chip is configured to achieve functions of the network element (such as, the second network element in the above method embodiments) in the embodiments of the present disclosure, the interface 2302 is configured to determine a migration type of a mobile IAB-node according to first assistance information of the IAB-node and/or second assistance information of a target IAB-donor of the IAB-node, in which the migration type includes a full migration and a partial migration.

Optionally, the first assistance information is context information of a terminal served by the IAB-node.

Optionally, the first assistance information includes at least one of: a number of terminals served by the IAB-node, a number of DRBs served by the IAB-node, a service bandwidth requirement on the IAB-node, a service delay requirement on the IAB-node, or information of a core network node.

Optionally, the second assistance information is information related to a resource of the target IAB-donor.

Optionally, the second assistance information includes at least one of: resource information that the target IAB-donor may provide, or a resource state of the target IAB-donor, in which the resource information that the target IAB-donor may provide includes at least one of: a number of terminals acceptable by the target IAB-donor, a number of DRBs acceptable by the target IAB-donor, a service bandwidth supportable by the target IAB-donor, or a service delay supportable by the target IAB-donor; and the resource state of the target IAB-donor includes at least one of: a number of terminals currently accepted by the target IAB-donor, a number of DRBs currently accepted by the target IAB-donor, a current service bandwidth of the target IAB-donor, or a current service delay of the target IAB-donor.

Optionally, the service delay supportable by the target IAB-donor includes a transmission network delay between the target IAB-donor and a core network node, in which the transmission network delay is confirmed by the target IAB-donor according to information of the core network node; and the information of the core network node is provided by the IAB-node, or a source IAB-donor when the migration type of the IAB-node in a last migration is the full migration.

Optionally, the migration type of the IAB-node in a last migration is the full migration, and the first network element is a source IAB-donor of the IAB-node; or the migration type of the IAB-node in the last migration is the partial migration, and the first network element is an F1-terminating IAB-donor of the IAB-node.

Optionally, when the second network element is the target IAB-donor, the interface 2302 is configured to send the second assistance information and IAB-node context update information to the target IAB-donor, in which the second assistance information is configured to determine the migration type of the IAB-node, and the IAB-node context update information indicates to the first network element that an IAB-MT switches to the target IAB-donor.

Optionally, when the second network element is the target IAB-donor, the interface 2302 is further configured to send the second assistance information of the target IAB-donor to the first network element, in which the second assistance information is configured to determine the migration type of the IAB-node, and the second assistance information further indicates to the first network element that an IAB-MT switches to the target IAB-donor.

Optionally, the first network element is the IAB-node.

Optionally, when the second network element is the target IAB-donor, the interface 2302 is configured to send the second assistance information of the target IAB-donor to the first network element, in which the second assistance information is configured to determine the migration type of the IAB-node.

Optionally, the migration type of the IAB-node in a last migration is the partial migration, and the first network element is a non-F1-terminating IAB-donor of the IAB-node.

Optionally, when the second network element is the target IAB-donor, the interface 2302 is configured to send the second assistance information of the target IAB-donor to the first network element, in which the second assistance information is configured to determine the migration type of the IAB-node.

Optionally, when the second network element is the IAB-node or an F1-terminating IAB donor of the IAB-node, the transceiver unit 2101 is configured to send the first assistance information of the IAB-node to the first network element, in which the first assistance information is configured to determine the migration type of the IAB-node.

Optionally, the first network element is the target IAB-donor of the IAB-node.

Optionally, when the second network element is the IAB-node or a non-F1-terminating IAB donor of the IAB-node, the interface 2302 is configured to send the first assistance information of the IAB-node to the first network element, in which the first assistance information is configured to determine the migration type of the IAB-node.

Optionally, the chip further includes a memory 2303 for storing necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above functions, but such implementation shall not be regarded as going beyond the scope of the protection of the embodiments of the present disclosure.

The embodiments of the present disclosure also provide a communication system. The system includes a communication apparatus as a network device (such as, the first network element in the above method embodiments) and a communication apparatus as a network device (such as, the second network element in the above method embodiments) in the above embodiment of FIG. 22. Or, the system includes a communication device as a network device (such as, the first network element in the above method embodiments) and a communication device as a network device (such as, the second network element in the above method embodiments) in the above embodiments in FIG 23.

The present disclosure also provides a computer readable storage medium for storing instructions. When the instructions are executed by a computer, functions of any one of the above method embodiments is performed.

The present disclosure also provides a computer program product. When the computer program product is executed by a computer, functions of any one of the above method embodiments is performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the present disclosure are distinguished merely for convenience of description, and are not intended to limit the scope of embodiments of the present disclosure, but also to indicate an order of precedence.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the present disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication device, and values or representations of the parameters may be other values or representations understandable by the communication device. When the above tables are implemented, other data structures may be used, for example, arrays, queues, containers, stacks, linear lists, pointers, linked lists, trees, graphs, structures, classes, heaps or hash tables may be used.

Predefined in the present disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the present disclosure. However, the protection scope of the present disclosure is not limited here. Changes and substitutions that may be easily considered by those skilled in the art shall be contained within the protection scope of the present disclosure. Therefore, the protection scope of the present disclosure shall be subject to the protection scope of claims.

## Claims

1. A method for determining a migration type, executed by a first network element, comprising:
determining a migration type of a mobile integrated access and backhaul (IAB)-node according to first assistance information of the IAB-node and/or second assistance information of a target IAB-donor of the IAB-node,
wherein the migration type comprises a full migration and a partial migration.

2. The method of claim 1, wherein the first assistance information is context information of a terminal served by the IAB-node.

3. The method of claim 2, wherein the first assistance information comprises at least one of: a number of terminals served by the IAB-node, a number of data radio bearers (DRBs) served by the IAB-node, a service bandwidth requirement on the IAB-node, a service delay requirement on the IAB-node, or information of a core network node.

4. The method of claim 1, wherein the second assistance information is information related to a resource of the target IAB-donor.

5. The method of claim 4, wherein the second assistance information comprises at least one of: resource information that the target IAB-donor may provide, or a resource state of the target IAB-donor,
wherein the resource information that the target IAB-donor may provide comprises at least one of: a number of terminals acceptable by the target IAB-donor, a number of DRBs acceptable by the target IAB-donor, a service bandwidth supportable by the target IAB-donor, or a service delay supportable by the target IAB-donor; and
the resource state of the target IAB-donor comprises at least one of: a number of terminals currently accepted by the target IAB-donor, a number of DRBs currently accepted by the target IAB-donor, a current service bandwidth of the target IAB-donor, or a current service delay of the target IAB-donor.

6. The method of claim 5, wherein the service delay supportable by the target IAB-donor comprises a transmission network delay between the target IAB-donor and a core network node,
wherein the transmission network delay is confirmed by the target IAB-donor according to information of the core network node; and the information of the core network node is provided by the IAB-node, or a source IAB-donor when the migration type of the IAB-node in a last migration is the full migration.

7. The method of claim 1, wherein the migration type of the IAB-node in a last migration is the full migration, and the first network element is a source IAB-donor of the IAB-node; or
the migration type of the IAB-node in the last migration is the partial migration, and the first network element is an F1-terminating IAB-donor of the IAB-node.

8. The method of claim 7, further comprising:
receiving the second assistance information and IAB-node context update information sent by the target IAB-donor, wherein the second assistance information is configured to determine the migration type of the IAB-node, and the IAB-node context update information indicates to the first network element that an IAB mobile termination (IAB-MT) switches to the target IAB-donor.

9. The method of claim 7, further comprising:
receiving the second assistance information sent by the target IAB-donor, wherein the second assistance information is configured to determine the migration type of the IAB-node, and the second assistance information further indicates to the first network element that an IAB-MT switches to the target IAB-donor.

10. The method of claim 7, further comprising:
determining the first assistance information of the IAB-node, wherein the first assistance information is configured to determine the migration type of the IAB-node.

11. The method of claim 7, further comprising:
in response to the migration type being the full migration, sending full migration indication information to the IAB-node, wherein the full migration indication information indicates the IAB-node to perform an operation related to the full migration; or
in response to the migration type being the partial migration, performing an operation related to the partial migration.

12. The method of claim 1, wherein the first network element is the IAB-node.

13. The method of claim 12, further comprising:
receiving the second assistance information sent by the target IAB-donor, wherein the second assistance information is configured to determine the migration type of the IAB-node.

14. The method of claim 12, further comprising:
in response to the migration type being the full migration, performing an operation related to the full migration; or
in response to the migration type being the partial migration and the migration type of the IAB-node in a last migration being the full migration, sending partial migration indication information to a source IAB-donor of the IAB-node; or
in response to the migration type being the partial migration and the migration type of the IAB-node in a last migration being the partial migration, sending partial migration indication information to an F1-terminating IAB-donor of the IAB-node,
wherein the partial migration indication information indicates to perform an operation related to the partial migration.

15. The method of claim 1, wherein the migration type of the IAB-node in a last migration is the partial migration, and the first network element is a non-F1-terminating IAB-donor of the IAB-node.

16. The method of claim 15, further comprising:
receiving the second assistance information sent by the target IAB-donor, wherein the second assistance information is configured to determine the migration type of the IAB-node.

17. The method of claim 15, further comprising:
receiving the first assistance information of the IAB-node, wherein the first assistance information is configured to determine the migration type of the IAB-node.

18. The method of claim 17, wherein receiving the first assistance information of the IAB-node comprises:
receiving the first assistance information sent by an F1-terminating IAB-donor of the IAB-node; or
receiving the first assistance information sent by the IAB-node.

19. The method of claim 15, further comprising:
in response to the migration type being the full migration, sending full migration indication information to the IAB-node, wherein the full migration indication information indicates the IAB-node to perform an operation related to the full migration; or
in response to the migration type being the partial migration, sending partial migration indication information to an F1-terminating IAB-donor of the IAB-node, wherein the partial migration indication information indicates the F1-terminating IAB-donor to perform an operation related to the partial migration.

20. The method of claim 1, wherein the first network element is the target IAB-donor of the IAB-node.

21. The method of claim 20, further comprising:
receiving the first assistance information of the IAB-node, wherein the first assistance information is configured to determine the migration type of the IAB-node.

22. The method of claim 20, wherein receiving the first assistance information of the IAB-node comprises:
receiving the first assistance information sent by the IAB-node; or
receiving the first assistance information sent by a non-F1-terminating IAB donor of the IAB-node.

23. The method of claim 20, further comprising:
in response to the migration type being the full migration, sending full migration indication information to the IAB-node, wherein the full migration indication information indicates the IAB-node to perform an operation related to the full migration; or
in response to the migration type being the partial migration, sending partial migration indication information to an F1-terminating IAB-donor of the IAB-node, wherein the partial migration indication information indicates the F1-terminating IAB-donor to perform an operation related to the partial migration.

24. The method of claim 14, 19 or 23, wherein the partial migration indication information further comprises: a partial migration reason,
wherein the partial migration reason indicates that a reason of the partial migration is mobility of the IAB-node.

25. A method for determining a migration type, executed by a second network element, comprising:
sending information to determine a migration type of a mobile integrated access and backhaul (IAB)-node to a first network element,
wherein the information to determine the migration type of the IAB-node comprises at least one of: first assistance information of the IAB-node, or second assistance information of a target IAB-donor of the IAB-node; and
the migration type comprises a full migration and a partial migration.

26. The method of claim 25, wherein the first assistance information is context information of a terminal served by the IAB-node.

27. The method of claim 26, wherein the first assistance information comprises at least one of: a number of terminals served by the IAB-node, a number of data radio bearers (DRBs) served by the IAB-node, a service bandwidth requirement on the IAB-node, or a service delay requirement on the IAB-node.

28. The method of claim 25, wherein the second assistance information is information related to a resource of the target IAB-donor.

29. The method of claim 28, wherein the second assistance information comprises at least one of: resource information that the target IAB-donor may provide, or a resource state of the target IAB-donor,
wherein the resource information that the target IAB-donor may provide comprises at least one of: a number of terminals acceptable by the target IAB-donor, a number of DRBs acceptable by the target IAB-donor, a service bandwidth supportable by the target IAB-donor, or a service delay supportable by the target IAB-donor; and
the resource state of the target IAB-donor comprises at least one of: a number of terminals currently accepted by the target IAB-donor, a number of DRBs currently accepted by the target IAB-donor, a current service bandwidth of the target IAB-donor, or a current service delay of the target IAB-donor.

30. The method of claim 29, wherein the service delay supportable by the target IAB-donor comprises a transmission network delay between the target IAB-donor and a core network node,
wherein the transmission network delay is confirmed by the target IAB-donor according to information of the core network node; and the information of the core network node is provided by the IAB-node, or a source IAB-donor when the migration type of the IAB-node in a last migration is the full migration.

31. The method of claim 25, wherein the migration type of the IAB-node in a last migration is the full migration, and the first network element is a source IAB-donor of the IAB-node; or
the migration type of the IAB-node in the last migration is the partial migration, and the first network element is an F1-terminating IAB-donor of the IAB-node.

32. The method of claim 31, wherein the second network element is the target IAB-donor, and the method further comprises:
sending the second assistance information and IAB-node context update information of the target IAB-donor to the first network element,
wherein the second assistance information is configured to determine the migration type of the IAB-node, and the IAB-node context update information indicates to the first network element that an IAB mobile termination (IAB-MT) switches to the target IAB-donor.

33. The method of claim 31, wherein the second network element is the target IAB-donor, and the method further comprises:
sending the second assistance information of the target IAB-donor to the first network element,
wherein the second assistance information is configured to determine the migration type of the IAB-node, and the second assistance information further indicates to the first network element that an IAB-MT switches to the target IAB-donor.

34. The method of claim 25, wherein the first network element is the IAB-node.

35. The method of claim 34, wherein the second network element is the target IAB-donor, and the method further comprises:
sending the second assistance information of the target IAB-donor to the first network element, wherein the second assistance information is configured to determine the migration type of the IAB-node.

36. The method of claim 25, wherein the migration type of the IAB-node in a last migration is the partial migration, and the first network element is a non-F1-terminating IAB-donor of the IAB-node.

37. The method of claim 36, wherein the second network element is the target IAB-donor, and the method further comprises:
sending the second assistance information of the target IAB-donor to the first network element, wherein the second assistance information is configured to determine the migration type of the IAB-node.

38. The method of claim 36, wherein the second network element is the IAB-node or an F1-terminating IAB donor of the IAB-node, and the method further comprises:
sending the first assistance information of the IAB-node to the first network element, wherein the first assistance information is configured to determine the migration type of the IAB-node.

39. The method of claim 25, wherein the first network element is the target IAB-donor of the IAB-node.

40. The method of claim 39, wherein the second network element is the IAB-node or a non-F1-terminating IAB donor of the IAB-node, and the method further comprises:
sending the first assistance information of the IAB-node to the first network element, wherein the first assistance information is configured to determine the migration type of the IAB-node.

41. A communication apparatus, arranged on a first network element, comprising:
a processing unit, configured to determine a migration type of a mobile integrated access and backhaul (IAB)-node according to first assistance information of the IAB-node and/or second assistance information of a target IAB-donor of the IAB-node,
wherein the migration type comprises a full migration and a partial migration.

42. A communication apparatus, arranged on a second network element, comprising:
a transceiver unit, configured to send information to determine a migration type of a mobile integrated access and backhaul (IAB)-node to a first network element,
wherein the information to determine the migration type of the IAB-node comprises at least one of: first assistance information of the IAB-node, or second assistance information of a target IAB-donor of the IAB-node; and
the migration type comprising a full migration and a partial migration.

43. A communication device, comprising a processor and a memory for storing a computer program, wherein when the computer program stored in the memory is executed by the processor, the communication device is caused to implement the method of any one of claims 1 to 24.

44. A communication device, comprising a processor and a memory for storing a computer program, wherein when the computer program stored in the memory is executed by the processor, the communication device is caused to implement the method of any one of claims 25 to 40.

45. A communication device, comprising: a processor and an interface circuit; wherein
the interface circuit is configured to receive code instructions and transmit the code instructions to the processor; and
the processor is configured to run the code instructions to implement the method of any one of claims 1 to 24.

46. A communication device, comprising: a processor and an interface circuit; wherein
the interface circuit is configured to receive code instructions and transmit the code instructions to the processor; and
the processor is configured to run the code instructions to implement the method of any one of claims 25 to 40.

47. A communication system, comprising a first network element and a second network element, comprising:
the first network element executing the method of any one of claims 1 to 24, and the second network element executing the method of any one of claims 25 to 40.

48. A computer readable storage medium for storing instructions, wherein when the instructions are executed, the method of any one of claims 1 to 24 is implemented.

49. A computer readable storage medium for storing instructions, wherein when the instructions are executed, the method of any one of claims 25 to 40 is implemented.
